(19) Europäisches Patentamt
European Patent Office
Office européen des brevets

(11) **EP 4 742 678 A1**

(12) **EUROPEAN PATENT APPLICATION**
published in accordance with Art. 153(4) EPC

(43) Date of publication:
**13.05.2026 Bulletin 2026/20**

(21) Application number: **23943997.9**

(22) Date of filing: **03.07.2023**

(51) International Patent Classification (IPC):
*H04N 19/70* (2014.01)   *H04N 19/46* (2014.01)

(52) Cooperative Patent Classification (CPC):
**H04N 19/46; H04N 19/70**

(86) International application number:
**PCT/CN2023/105611**

(87) International publication number:
**WO 2025/007263 (09.01.2025 Gazette 2025/02)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **GUANGDONG OPPO MOBILE
TELECOMMUNICATIONS
CORP., LTD.
Dongguan, Guangdong 523860 (CN)**

(72) Inventor: **ZHANG, Lai
Dongguan, Guangdong 523860 (CN)**

(74) Representative: **Taor, Simon Edward William et al
Venner Shipley LLP
200 Aldersgate
London EC1A 4HD (GB)**

(54) **ENCODING METHOD, DECODING METHOD, CODE STREAM, ENCODER, DECODER, AND STORAGE MEDIUM**

(57)     Embodiments of the disclosure provide a coding method, a bitstream, an encoder, a decoder, and a storage medium. The decoding method includes the following. A related syntax element for a current block is obtained, where the related syntax element indicates whether prediction on the current block is to be performed based on both a transform model list and an intra-block copy (IBC) technology. A reference block obtained by applying the IBC technology to the current block is determined. A first transform model obtained based on a constructed transform model list is determined according to the related syntax element, where the constructed transform model list includes at least two types of transform models. A prediction block for the current block is determined based on the reference block and the first transform model.

OBTAIN RELATED SYNTAX ELEMENT FOR CURRENT BLOCK, WHERE RELATED SYNTAX ELEMENT INDICATES WHETHER PREDICTION ON CURRENT BLOCK IS TO BE PERFORMED BASED ON BOTH TRANSFORM MODEL LIST AND IBC TECHNOLOGY — 101

DETERMINE REFERENCE BLOCK OBTAINED BY APPLYING IBC TECHNOLOGY TO CURRENT BLOCK — 102

DETERMINE, ACCORDING TO RELATED SYNTAX ELEMENT, FIRST TRANSFORM MODEL OBTAINED BASED ON CONSTRUCTED TRANSFORM MODEL LIST, WHERE CONSTRUCTED TRANSFORM MODEL LIST INCLUDES AT LEAST TWO TYPES OF TRANSFORM MODELS — 103

DETERMINE PREDICTION BLOCK FOR CURRENT BLOCK BASED ON REFERENCE BLOCK AND FIRST TRANSFORM MODEL — 104

FIG. 11

**Description**

TECHNICAL FIELD

This disclosure relates to the field of video coding technology, and more particularly, to a coding method, a bitstream, an encoder, a decoder, and a storage medium.

BACKGROUND

Intra block copy (IBC) technology is an intra prediction technology in which prediction samples are obtained based on block matching. IBC is similar to inter prediction in that prediction is implemented based on a block vector directed to a reference block from a current block. The difference lies in that a reference block in inter prediction comes from a reconstructed picture that has been encoded, while a reference block in IBC comes from a reconstructed part of a current picture. Local illumination compensation (LIC) technology is a block-level linear transform technology. An LIC method is based on existence of a linear relationship between a current coding block and a reference block.

In the related art, with IBC technology, a reference block can be determined from a current picture through block compensation. On this basis, IBC technology can be combined with LIC technology to perform linear transform on the reference block to determine a prediction block, thereby improving prediction accuracy.

However, linear transform parameters for LIC technology are derived from reconstructed samples neighbouring a current block and reconstructed samples neighbouring a reference block, which is unable to provide a variety of parameter options and therefore has limitation, thus affecting coding performance.

SUMMARY

The disclosure provides a coding method, a bitstream, an encoder, a decoder, and a storage medium, which can improve prediction diversity and improve coding performance.

Technical solutions of the disclosure can be implemented as follows.

In a first aspect, a decoding method is provided in embodiments of the disclosure. The method is applied to a decoder. The method includes the following. A related syntax element for a current block is obtained, where the related syntax element indicates whether prediction on the current block is to be performed based on both a transform model list and an intra-block copy (IBC) technology. A reference block obtained by applying the IBC technology to the current block is determined. A first transform model obtained based on a constructed transform model list is determined according to the related syntax element, where the constructed transform model list includes at least two types of transform models. A prediction block for the current block is determined based on the reference block and the first transform model.

In a second aspect, an encoding method is provided in embodiments of the disclosure. The encoding method is applied to an encoder. The method includes the following. A candidate block vector list for a current block is determined. A reference block vector is determined based on the candidate block vector list. A reference block is determined based on the reference block vector. If a prediction mode for the current block is determined to be an IBC technology combined with a transform model list, a first transform model is obtained from a constructed transform model list, where the constructed transform model list includes at least two types of transform models. A prediction block for the current block is determined based on the reference block and the first transform model. A related syntax element for the current block is encoded, and encoded bits obtained are signalled into a bitstream, where the related syntax element indicates whether prediction on the current block is to be performed based on both the transform model list and the IBC technology.

In a third aspect, a bitstream is provided in embodiments of the disclosure. The bitstream is generated by performing bit encoding on information to-be-encoded. The information to-be-encoded includes at least one of: a first syntax element, a second syntax element, a third syntax element, a fourth syntax element, a fifth syntax element, a sixth syntax element, a size of a current block, a combined inter and intra prediction (CIIP) flag for the current block, a geometric partitioning mode (GPM) flag for the current block, an MBVD flag for the current block, a skip flag for the current block, a template matching (TM)_merge flag for the current block, or a context model. The first syntax element indicates a prediction mode for the current block using an IBC technology. The second syntax element indicates whether a transform model list is to be applied to the current block for prediction. The third syntax element indicates whether a transform technology is to be applied for prediction. The fourth syntax element indicates a model index of a transform model in the transform model list. The fifth syntax element indicates an index of a local illumination compensation (LIC) model used in a multi-mode LIC technology. The sixth syntax element indicates index information of a reference block.

In a fourth aspect, a decoder is provided in embodiments of the disclosure. The decoder includes a decoding portion, a first determining portion, and a first predicting portion. The decoding portion is configured to a related syntax element for a current block, where the related syntax element indicates whether prediction on the current block is to be performed based on both a transform model list and an IBC technology. The first determining portion is configured to determine a reference block obtained by applying the IBC technology to the current block, and determine, according to the related syntax element, a first transform model obtained based on a constructed transform model list, where the constructed transform model list includes at least two types of transform models. The first prediction portion is configured to determine a prediction block for the current block based on the reference block and the first transform model.

In a fifth aspect, a decoder is provided in embodiments of the disclosure. The decoder includes a first memory and a first processor. The first memory is configured to store computer programs executable by the first processor. The first processor is configured to, when executing the computer programs, perform the decoding method described in the first aspect.

In a sixth aspect, an encoder is provided in embodiments of the disclosure. The encoder includes a second determining portion, a second predicting portion, and an encoding portion. The second determining portion is configured to: determine a candidate block vector list for a current block; determine a reference block vector based on the candidate block vector list; determine a reference block based on the reference block vector; and if a prediction mode for the current block is determined to be an IBC technology combined with a transform model list, obtain a first transform model from a constructed transform model list, where the constructed transform model list includes at least two types of transform models. The second predicting portion is configured to determine a prediction block for the current block based on the reference block and the first transform model. The encoding portion is configured to encode a related syntax element for the current block and signal, via a signalling portion, encoded bits obtained into a bitstream, where the related syntax element indicates whether prediction on the current block is to be performed based on both the transform model list and the IBC technology.

In a seventh aspect, an encoder is provided in embodiments of the disclosure. The encoder includes a second memory and a second processor. The second memory is configured to store computer programs executable by the second processor. The second processor is configured to, when executing the computer programs, perform the encoding method described in the second aspect.

In an eighth aspect, a computer-readable storage medium is provided in embodiments of the disclosure. The computer-readable storage medium stores computer programs, which, when executed by a first processor, implement the decoding method described in the first aspect, or when executed by the second processor, implement the encoding method described in the second aspect.

Embodiments of the disclosure provide a coding method, a bitstream, an encoder, a decoder, and a storage medium. The decoder or the encoder can select the first transform model from the transform model list including at least two types of transform models, and apply the selected first transform model to transform the reference block, thereby determining the prediction block. Therefore, during coding, the first transform model used for transform can be selected and determined from the transform model list, which ensures diversity in selection. As such, it is possible to increase options for prediction, improve prediction diversity, and thus improves coding performance.

BRIEF DESCRIPTION OF THE DRAWINGS

FIG. 1 is a schematic diagram illustrating a prediction procedure in Intra template matching prediction (intra TMP) technology.

FIG. 2 is a schematic diagram illustrating a matching block in Intra TMP technology.

FIG. 3 is a schematic diagram illustrating template types in Intra TMP technology.

FIG. 4A is a schematic diagram illustrating coarse search in template matching in Intra TMP technology.

FIG. 4B is a schematic diagram illustrating fine search in template matching in Intra TMP technology.

FIG. 5 is a schematic diagram illustrating weighted fusion in Intra TMP fusion prediction technology.

FIG. 6A is a schematic diagram illustrating a filter shape.

FIG. 6B is a schematic diagram of a method for deriving filter coefficients.

FIG. 7 is a schematic diagram of a vertical partitioning method and a horizontal partitioning method for a coding block.

FIG. 8 is a schematic diagram illustrating positions.

FIG. 9A is a schematic block diagram of an encoder provided in embodiments of the disclosure.

FIG. 9B is a schematic block diagram of a decoder provided in embodiments of the disclosure.

FIG. 10 is a schematic diagram illustrating a network architecture of a coding system provided in embodiments of the disclosure.

FIG. 11 is a schematic flowchart of a decoding method provided in embodiments of the disclosure.

FIG. 12 is a schematic flowchart of an encoding method provided in embodiments of the disclosure.

FIG. 13 is a schematic structural diagram of a decoder provided in embodiments of the disclosure.

FIG. 14 is a schematic diagram illustrating the hardware structure of a decoder provided in embodiments of the disclosure.

FIG. 15 is a schematic structural diagram of an encoder provided in embodiments of the disclosure.

FIG. 16 is a schematic diagram illustrating the hardware structure of an encoder provided in embodiments of the disclosure.

DETAILED DESCRIPTION

To facilitate more comprehensive understanding of the features and technical content of embodiments of the disclosure, a detailed explanation of the implementation of embodiments of the disclosure is given below in conjunction with accompanying drawings. The accompanying drawings are for illustration only rather than limiting embodiments of the disclosure.

Unless otherwise defined, all technical and scientific terms used in the disclosure have the same meanings as those commonly understood by those skilled in the technical field that the disclosure relates to. The terminology used in the disclosure is intended only for describing embodiments of the disclosure rather than limiting the disclosure.

In the following illustration, "some embodiments" describes a subset of all possible embodiments. However, it should be understood that, "some embodiments" can be the same subset or different subsets of all possible embodiments and can be combined with each other without conflict. It should also be pointed out that, terms "first/second/third" used in embodiments of the disclosure are merely for distinguishing similar objects and do not represent a specific order of the objects. It can be understood that, the specific order or sequence of "first/second/third" is interchangeable when allowed, so that embodiments of the disclosure described herein can be implemented in an order other than that illustrated or described herein.

Before further elaborations of embodiments of the disclosure are given, the terms and terminology involved in embodiments of the disclosure are explained firstly. The terms and terminology involved in embodiments of the disclosure are applicable to the following interpretations:

coding block (CB)

block matching (BM)

coding unit (CU)

coding tree unit (CTU)

block vector (BV)

sum of absolute difference (SAD)

sum of absolute transformed difference (SATD)

mean square error (MSE)

most probable mode (MPM)

mean absolute deviation (MAD)

sequence parameter set (SPS)

palette (PLT)

rate distortion optimization (RDO)

enhanced compression model (ECM)

joint video experts team (JVET)

intra template matching prediction (intra TMP)

block differential pulse coded modulation (BDPCM)

intra block copy (IBC)

local illumination compensation (LIC)

cross component merge (CCMerge)

It can be understood that, in a video picture, a coding block is generally represented by a first colour component, a second colour component, and a third colour component, where the three colour components are a luma component, a blue chroma component, and a red chroma component. Specifically, the luma component is typically denoted by symbol Y, the blue chroma component is denoted by symbol Cb or U, and the red chroma component is denoted by symbol Cr or V. As such, a video picture can be represented in a *YCbCr* format or a *YUV* format.

1) Intra TMP technology

Intra TMP technology is a special intra-prediction technology, which is also referred to as IntraTMP for short, and is a special intra-prediction coding tool mainly applied to screen content coding. IntraTMP is implemented mainly through the following procedure: some of reconstructed samples neighbouring a current coding block are selected as a template, the most similar template is sought for within a given reconstructed region of a current picture, and a reconstructed block corresponding to the most similar template is used as a matching block and then used as a prediction block for the current coding block. The template for the coding block is usually chosen from a neighbouring reconstructed region of the current coding block.

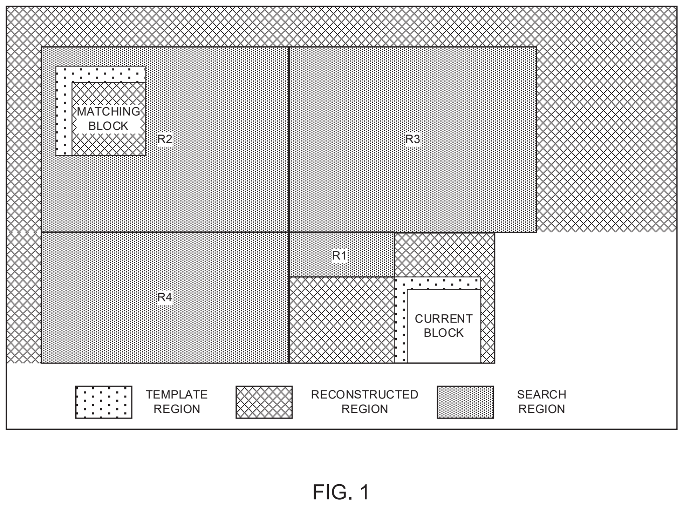

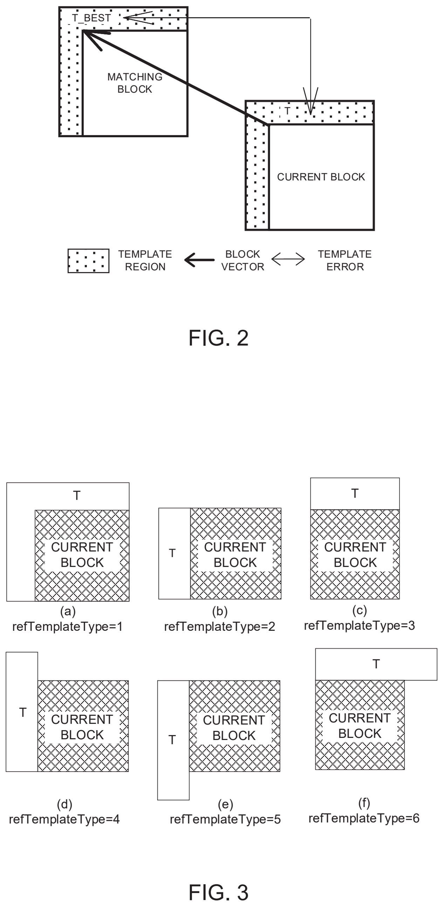

Exemplarily, taking the neighbouring reconstructed region of the current block as an example, as illustrated in FIG. 1, a region filled with grid represents the reconstructed region. In the reconstructed region, R1, R2, R3, and R4 are search regions. Matching block searching is carried out sequentially in the regions R1 to R4. A neighbouring region of the current block serves as a first template (T), and a neighbouring region of a matching block (which can also be referred to as a "reference block") is a second template (i.e., "reference-block template" or "matching template", T_BEST). As illustrated in FIG. 2, both an encoder and a decoder search within a predefined search range in the current picture based on a template (T) for the coding block to determine a matching template (T_BEST) with the minimum template error value, and then use a reconstructed block (Ref Block) corresponding to the matching template as the prediction block for the current coding block (Cur Block). The degree of similarity between templates is represented by the magnitude of the template error value, where a smaller template error value corresponds to a higher degree of similarity. In embodiments of the disclosure, the template error value can be an SAD, an SATD, an MSE, a sum of squared differences (SSD), an MAD, a mean squared deviation (MSD), a normalized cross-correlation (NCC), etc., which is not specifically limited herein.

Exemplarily, taking the SAD as an example, the template error value in this case is as follows:

$$SAD(T_i) = \sum_{m=0}^{M-1}|T_{i,m} - T_m|, m = 0,1,...,M-1 \qquad (1)$$

Here, $T_i$ represents the template used in the search procedure, and M represents the number of samples in the template.

It should be noted that, in Intra TMP technology, neighbouring reconstructed samples of the current block are used as a template when searching for the matching template within the predefined search region. The neighbouring reconstructed samples can be top reference samples, top-left reference samples, top-right reference samples, left reference samples, and bottom-left reference samples of the current block, etc. Therefore, with regard to availability of these neighbouring reconstructed samples, the template can be classified into different template types and a corresponding template type can be determined.

It should also be noted that, the template type can be represented by *refTemplateType.* FIG. 3 is a schematic diagram illustrating template types in Intra TMP technology. As illustrated in FIG. 3, a block filled with grid represents the current block, and the neighbouring region of the current block serves as the template T. Here, six template types are illustrated.

Exemplarily, the six template types are as follows. If the top-left reference samples, the top reference samples, and the left reference samples are all available, the value of *refTemplateType* is 1, and the template shape is as illustrated in (a) in FIG. 3. If only the left reference samples are available, the value of *refTemplateType* is 2, and the template shape is as illustrated in (b) in FIG. 3. If only the top reference samples are available, the value of *refTemplateType* is 3, and the template shape is as illustrated in (c) in FIG. 3. If only the left reference samples and the top-left reference samples are available, the value of *refTemplateType* is 4, and the template shape is as illustrated in (d) in FIG. 3. If only the left reference samples and the bottom-left reference samples are available, the value of *refTemplateType* is 5, and the template shape is as illustrated in (e) in FIG. 3. If only the top reference samples and the top-right reference samples are available, the value of *refTemplateType* is 6, and the template shape is as illustrated in (f) in FIG. 3.

In Intra TMP technology, the coder (that is, encoder/decoder) indicates, via a flag *intra_tmp_flag,* whether the current coding block is encoded by applying an IntraTMP mode. If the current coding block is encoded by applying the IntraTMP mode, the same template matching procedure is performed at a decoding end to obtain the same prediction block at the decoding end, rather than additionally encode block vector information directed to the matching block from the current coding block. The following provides examples to illustrate Intra TMP technology.

2) IntraTMP adaptation for camera-captured content technology

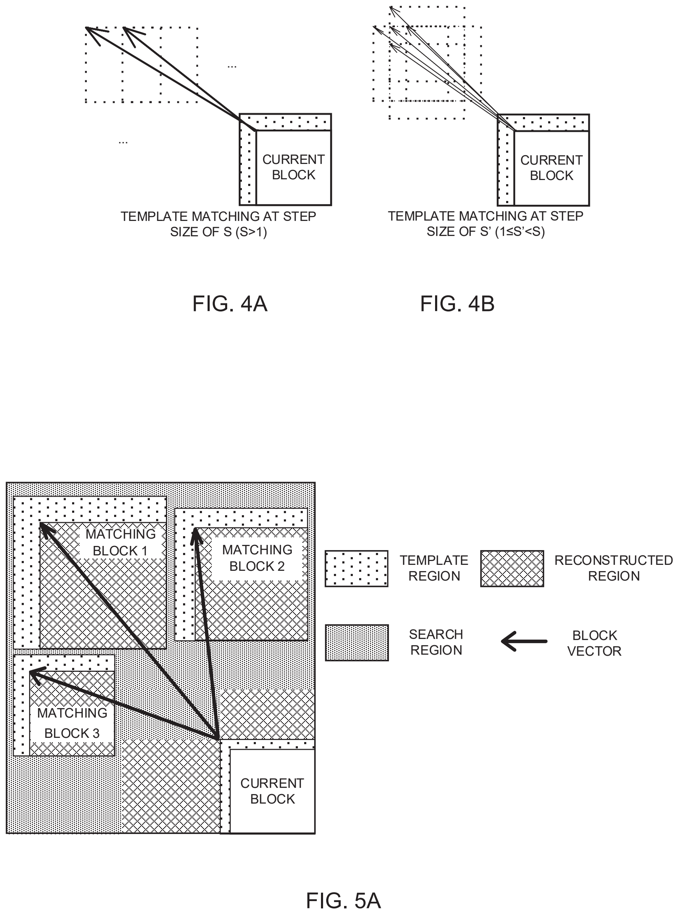

On the basis of the conventional IntraTMP technology, in IntraTMP adaptation for camera-captured content technology, template matching at a step size of S (i.e., template matching is performed every S samples horizontally and vertically, where S > 1) is proposed (as illustrated in FIG. 4A). For instance, in the search region, a matching block is sought for through sub-sampling in both horizontal and vertical directions, instead of searching for a matching block sample by sample through raster scan. For example, if a current block vector for template matching is *(X0, Y*0), then the next block vector for template matching is (X0+S, *Y*0), and the vertical coordinate of a block vector for template matching in the next row is Y0+S. After template matching is completed, refinement is performed around the best-matching block within a certain range (as illustrated in FIG. 4B, template matching is performed at a smaller step size S'), thereby optimizing the matching result. With such technology, it is possible to significantly reduce complexity of the IntraTMP mode while maintaining high encoding efficiency.

3) IntraTMP multi-candidate technology

In IntraTMP multi-candidate technology, *N* candidate matching blocks are found in a reference region through template matching, in other words, a candidate block list with a length of N is constructed, and candidate matching blocks in the list can be sorted according to template error values thereof relative to the current block. According to indexes, a specific candidate block is selected from the list as a final prediction block. For a coding block to which IntraTMP multi-candidate technology is applied, after an IntraTMP flag *intra_tmp_flag* is decoded to be true, *intra_tmp_idx* is decoded, where the syntax element *intra_tmp_idx* can indicate the index of the selected candidate block.

```
intra_tmp_flag
if(intra_tmp_flag)
{
 intra_tmp_idx
}
```

Exemplarily, a template matching procedure for constructing the candidate block list is as follows.

In a first step, a first round of searching is carried out at a certain step size, e.g., horizontal and vertical step sizes of 4, to find N best-matching blocks with certain intervals (the first N blocks with the minimum template error values).

In a second step, a second round of searching is carried out in neighbouring regions of the N matching blocks found in the first step. These neighbouring regions can be set to be multiple non-overlapping regions based on the step size in the first step, to find M best-matching blocks from these regions (which may include the matching block(s) found in the first step).

The encoder and the decoder adopt the same constructing procedure to obtain consistent candidate block lists.

*intra_tmp_idx* can be encoded through fixed-length coding or variable-length coding, for example, through truncated binary coding.

A variable-length coding method is as follows. A smaller index (a smaller *intra_tmp_idx* value) corresponds to a smaller template error value of a corresponding candidate block and higher probability of being selected, and shorter codewords can be assigned to *intra_tmp_idx* with a smaller value, for example, as illustrated in Table 1:

Table 1

| *intra_tmp_idx* | Binary code | |
|---|---|---|
| 0 | 1 | |
| 1 | 0 | 1 |
| 2 | 0 | 0 |
| Bin index | 0 | 1 |

If the maximum value *N of intra_tmp_idx* is relatively large, codewords of the same length can be assigned to *intra_tmp_idx* with larger values. For example, N = 15, as illustrated in Table 2:

Table 2

| *Intra_tmp_idx* | Binary code | | | | |
|---|---|---|---|---|---|
| 0 | 1 | 1 | | | |
| 1 | 1 | 0 | 0 | | |
| 2 | 1 | 0 | 1 | | |
| 3~6 | 0 | x | x | x | |
| 7~14 | 0 | x | x | x | x |

In Table 2 above, x can be obtained through truncated binary coding.

4) IntraTMP fusion prediction technology, also referred to as IntraTMP multi-matching-block fusion technology

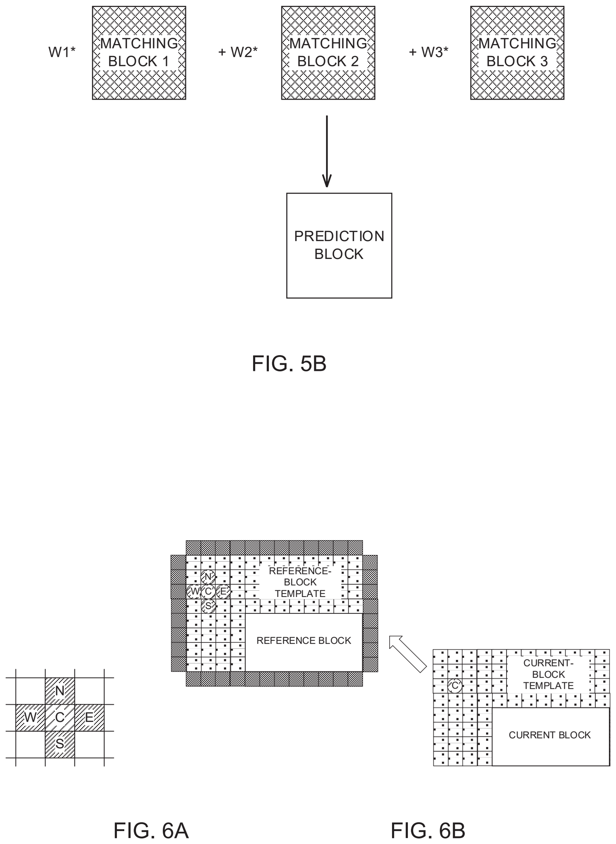

Through intra template matching, template error values between reconstructed blocks at different positions and the current coding block can be obtained. These reconstructed blocks can be represented by block vectors directed to the reconstructed blocks from the current coding block. A candidate block vector list is constructed to record block vectors with smaller template error values during template matching. Based on conditions such as block vector distances and template error values, one or more block vectors are selected from the candidate block vector list, and reconstructed blocks that the one or more block vectors are directed to are used as matching blocks for the current coding block. A weight value is determined for each matching block, and then weighted fusion is performed on the matching blocks according to the weight values for the matching blocks to obtain a final prediction block, thereby realizing IntraTMP fusion prediction. The procedure is illustrated in FIG. 5A and FIG. 5B.

The number of matching blocks to-be-fused can be a fixed value or determined based on a magnitude relationship of the template error values of the matching blocks. For example, for N available matching blocks, a threshold is set as *Threshold = minSAD << 1*, where *minSAD* is the minimum value among the template error values of the matching blocks. Only matching blocks whose template error values are less than or equal to the threshold are selected for fusion. With this method, matching blocks for fusion can be determined.

After the matching blocks for fusion are determined, a weight for each matching block can use preset fixed values or determined through calculation based on template error values or template derivation.

5) IntraTMP filtering

A matching block (also referred to as reference block) obtained through intra template matching is typically used directly as a prediction block for a current block. Filtering can be performed on the prediction block to improve prediction performance. Whether filtering is to be performed on the prediction block for the current block can be indicated via a block-level flag.

The filter can take various forms. One possible filter form is illustrated in formula (2) below:

$$PredC = c0C + c1N + c2S + c3E + c4W + c5B \qquad (2)$$

C is a sample on which filtering is to be performed, N is an upper sample of sample C, S is a lower sample of sample C, W is a left sample of sample C, and E is a right sample of sample C, as illustrated in FIG. 6A. B (Bias) is a fixed value, for example, B is the median of the sample range. c0 to c5 are filter coefficients.

A method for training filter coefficients is based on a reference-block template and a current-block template. For example, a template region can be a reconstructed region of 4 rows neighbouring the top of the current block and 4 columns neighbouring the left of the current block. For the reference block, one additional row on each side (top, bottom, left, and right) of the template region is also needed as reference. As illustrated in FIG. 6B, if part of the additional region is not yet encoded, it can be copied from the template region.

A method for training filter coefficients is to calculate a set of coefficients that minimizes the template error value between the filtered reference-block template and the current-block template.

If IntraTMP filtering is applied to the current block to perform filtering on the prediction block obtained directly from the reference block, one approach is to perform filtering on each sample in the prediction block from left to right and from top to bottom, and the filtered value is used as the prediction value.

6) Template derivation-based IntraTMP fusion

In IntraTMP fusion prediction, multiple reference blocks can be obtained through intra template matching, and weighted fusion can be performed on the reference blocks. Weight values are typically predefined fixed values or calculated based on template errors corresponding to the reference blocks. For example, the template error values corresponding to the reference blocks are $SAD1$ to $SADn$, and then one way for calculating the weights is illustrated in formula (3), formula (4), and formula (5):

$$SADi = (SADi == 0) ? 1 : SADi \qquad (3)$$

$$SUM = \sum_{i=1}^{n} SAD_i \qquad (4)$$

$$Wi = ( SUM - SADi ) / (( n - 1 ) * SUM ) \qquad (5)$$

$n$ is the total number of reference blocks, and $Wi$ is a weight value corresponding to a reference block with a template error value of $SADi$. A prediction block after weighted fusion can be expressed as formula (6):

$$Pred = \sum_{i=1}^{n} Wn * Predn \qquad (6)$$

The template derivation-based IntraTMP fusion method adopts a method like the method for training filter coefficients, to obtain weights for fusion prediction through training based on reference-block templates and a current-block template. For example, weighted fusion is performed by using 5 reference blocks, which is illustrated in formula (7):

$$pred = \sum_{n=0}^{4} w_n * refBlock_n + w_5 * Bias \qquad (7)$$

One way to determine the weights is to calculate a set of coefficients that minimizes the template error value between a fused reference-block template and the current-block template.

7) Template-based intra mode derivation (TIMD) technology

In TIMD technology, an L-shaped region of reconstructed samples neighbouring a current coding block are used as a template, and prediction samples for the template region under different intra-prediction modes are calculated by traversing prediction modes in an MPM list, to obtain template error values between prediction samples and the reconstructed samples under different intra-prediction modes, which is represented by an SATD. The optimal intra-prediction mode is selected based on the template error values. At a decoding end, the intra-prediction mode is determined through the same derivation procedure, thereby reducing the number of bits required to encode mode information.

8) Combined inter and intra prediction (CIIP) technology

In CIIP technology, a prediction block for a current coding block is obtained by combining intra prediction and inter prediction and performing weighted averaging on an intra-prediction block and an inter-prediction block. In ECM, CIIP is combined with template-based prediction technology, and different weights are assigned to various regions to improve prediction accuracy. Specifically, the intra-prediction block (*pred_intra*) is obtained based on a TIMD mode, while the inter-prediction block (*pred_inter*) is obtained based on a template-based merge mode. The weights (*wIntra, winter)* are determined based on an intra-prediction mode derived and positions of samples to-be-predicted. The final prediction block *(Pred)* is calculated as in formula (8):

$$Pred = (wIntra * pred\_intra + wInter * pred\_inter + 4) >> 3 \qquad (8)$$

*wIntra* and *winter are* determined by an intra-prediction mode (*intra_dir*) derived from TIMD. ECM has 65 intra angular prediction modes ($2 \leq intra\_dir <= 66$). If $2 \leq intra\_dir < 34$, the current coding block is vertically quartered; if $34 <= intra\_dir <= 66$, the current coding block is horizontally quartered. Weight values (*wIntra, winter)* for each region are illustrated in Table 3.

Table 3

| Region index | (*wIntra, wInter)* |
|---|---|
| 0 | (6, 2) |
| 1 | (5, 3) |
| 2 | (3, 5) |
| 3 | (2, 6) |

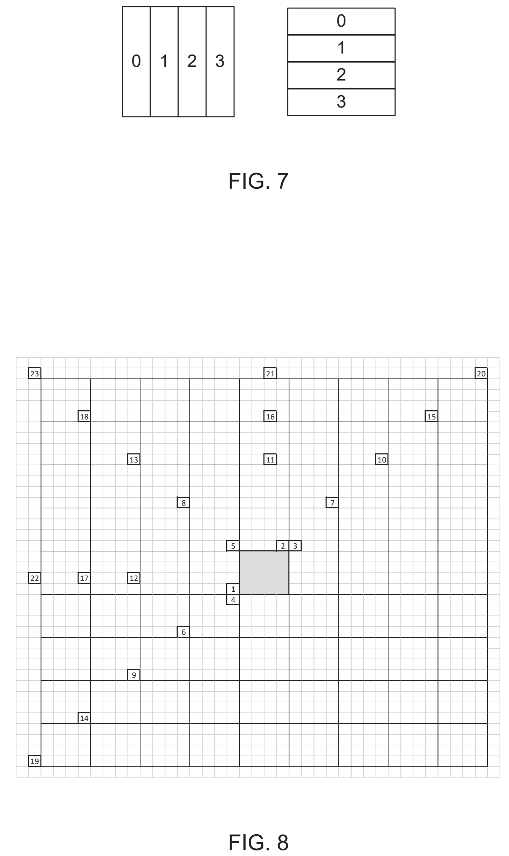

The indexes of the regions in the case of vertical or horizontal quartering are illustrated in FIG. 7. In particular, if *intra_dir* = 0 or 1, partitioning of a region into sub-regions is skipped. *wIntra* and *winter* are selected from (3, 1), (2, 2), and (1, 3) based on coding types (intra or inter) for two coding blocks located at the left and the top.

9) IBC technology

IBC is an intra prediction technology in which prediction samples are obtained based on block matching. IBC is similar to inter prediction in that prediction is implemented based on a block vector directed to a reference block from a current block. The difference lies in that a reference block in inter prediction comes from a reconstructed picture that has been encoded, while a reference block in IBC comes from a reconstructed part of a current picture. Block vector information needs to be transmitted via a bitstream. Therefore, similar to intra prediction, IBC includes an IBC-advanced motion vector prediction (AMVP) mode and an IBC-Merge mode.

In the IBC-AMVP mode, a prediction block vector is obtained from a constructed candidate block vector list. Based on the prediction block vector, the reference block for the current block and a corresponding final block vector are obtained through procedures such as hash search and full search. The final block vector is encoded based on the prediction block vector, thereby improving encoding efficiency.

In the IBC-Merge mode, prediction is performed based on the constructed candidate block vector list. The best block vector is selected from the list as the final block vector through encoding procedures such as SATD and RDO, and a reconstructed block that the best block vector is directed to is used as the reference block, thereby completing prediction. An index of a block vector in the list, rather than the block vector itself, is encoded, thereby improving encoding efficiency.

The candidate block vector list can include coding information such as a block vector for a neighbouring coding block, a previously-encoded block vector, and an average block vector.

The candidate block vector list can include information such as an LIC flag. If an LIC flag for a certain candidate is true, an LIC flag for the current block is set to true when the candidate block vector is selected for the current block.

10) LIC technology

LIC technology is a block-level linear transform technology. In an LIC method, it is considered that there is a linear relationship between a current coding block and a reference block, which can be expressed as formula (9):

$$\text{Pred} = \alpha \cdot \text{ref} + \beta \qquad\qquad (9)$$

$\alpha$ and $\beta$ can be derived from samples in a reconstructed region neighbouring the current coding block and samples in a reconstructed region neighbouring the reference block, and obtained through methods such as least squares.

In addition, a threshold *threshold* can be set. Different linear parameters can be selected according to the magnitude relationship between a reference-block sample and the threshold, as expressed in formula (10):

$$\begin{cases} \text{Pred} = \alpha_1 \cdot \text{ref} + \beta_1, & \text{ref} <= \text{threshold} \\ \text{Pred} = \alpha_2 \cdot \text{ref} + \beta_2, & \text{else} \end{cases} \qquad (10)$$

11) Non-neighbouring candidates for Inter-Merge

For an inter-coding block for a Merge mode, non-neighbouring candidates can be added when constructing a Merge List. Non-neighbouring samples are selected based on the size of the current block and used for attempting to construct merge candidates. Sample positions of the non-neighbouring samples and the current block are illustrated in FIG. 8. In FIG. 8, candidates at positions marked 1~5 are referred to as candidates at neighbouring positions, while the rest are referred to as candidates at non-neighbouring positions.

12) Multi-mode IBC-LIC technology

In multi-mode IBC-LIC technology, an IBC-LIC method is classified into several sub-methods according to a template region used for deriving linear parameters and the number of linear transform models. In an example, IBC-LIC is classified into the following four sub-methods:

    1. Using L-shaped template region, single model;

    2. Using left template region, single model;

    3. Using right template region, single model;

    4. Using L-shaped template region, two models (different models are selected according to a threshold in order for linear transform).

In the disclosure, a specific IBC-LIC sub-method can be selected by encoding an index.

However, with IBC technology, a reference block can be determined from a current picture through block compensation. On this basis, IBC technology can be combined with LIC technology to perform linear transform on the reference block, thereby improving prediction accuracy. One limitation of LIC technology is that linear transform parameters for LIC technology are derived from reconstructed samples neighbouring a current block and reconstructed samples neighbouring the reference block, which is unable to provide a variety of parameter options.

The disclosure provides a method for constructing a transform model candidate list for a current coding block based on transform models applied to coded blocks, which can improve prediction diversity. The optimal transform model for the current coding block is selected at an encoding end, thereby improving encoding efficiency.

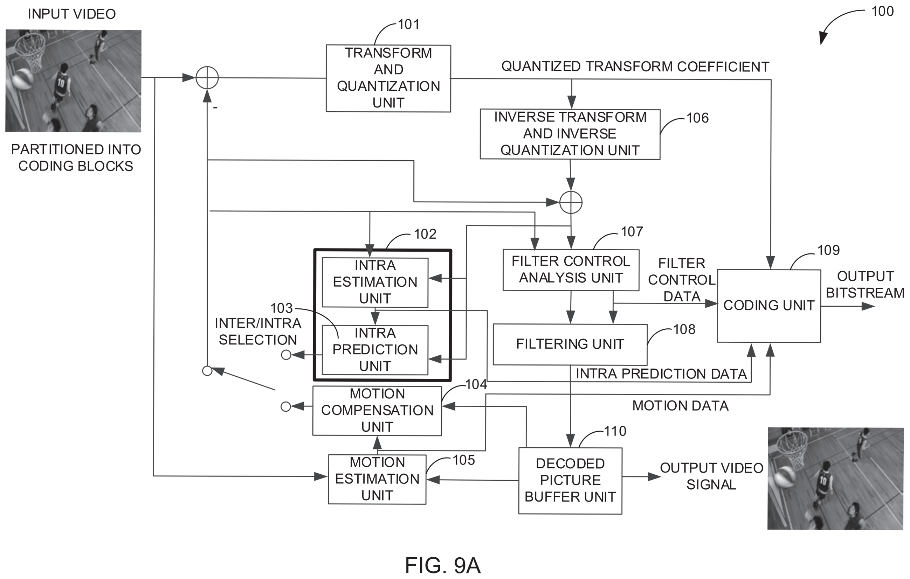

Referring to FIG. 9A, FIG. 9A is a schematic block diagram of an encoder provided in embodiments of the disclosure. As illustrated in FIG. 9A, the encoder (which is specifically a "video encoder") 100 may include a transform and quantization unit 101, an intra estimation unit 102, an intra prediction unit 103, a motion compensation unit 104, a motion estimation unit 105, an inverse transform and inverse quantization unit 106, a filter control analysis unit 107, a filtering unit 108, a coding unit 109, a decoded picture buffer unit 110, and the like. The filtering unit 108 can implement deblocking filtering and sample adaptive offset (SAO) filtering. The coding unit 109 can implement header information encoding and context-based adaptive binary arithmetic coding (CABAC). For an input original video signal, one video coding block can be obtained through partitioning of a CTU. Then, for residual sample information obtained after intra prediction or inter prediction, the video coding block is transformed by the transform and quantization unit 101, including transforming the residual information from the sample domain to the transform domain, and the obtained transform coefficients are quantized, so as to further reduce bit rate. The intra estimation unit 102 and the intra prediction unit 103 are used to perform intra prediction on the coding block. Specifically, the intra estimation unit 102 and the intra prediction unit 103 are used to determine an intra prediction mode to-be-used to encode the coding block. The motion compensation unit 104 and the motion estimation unit 105 are used to perform inter prediction encoding on the received coding block relative to one or more blocks in one or more reference pictures, to provide temporal prediction information. The motion estimation performed by the motion estimation unit 105 is a process of generating a motion vector, where the motion vector can be used to estimate motion of the coding block. The motion compensation unit 104 is used to perform motion compensation based on the motion vector determined by the motion estimation unit 105. After the intra prediction mode is determined, the intra prediction unit 103 is used to provide the selected intra prediction data to the coding unit 109, and the motion estimation unit 105 is used to send the calculated motion vector data to the coding unit 109. In addition, the inverse transform and inverse quantization unit 106 is used for reconstruction of the coding block. A residual block is reconstructed in the sample domain, and blocking artifacts of the reconstructed residual block are removed by the filter control analysis unit 107 and the filtering unit 108, and then the reconstructed residual block is added to a prediction block for a picture in the decoded picture buffer unit 110, to generate a reconstructed coding block. The coding unit 109 is used to encode various coding parameters and quantized transform coefficients. In the CABAC-based encoding algorithm, the context can be based on neighbouring coding blocks, and the coding unit 109 can be used to encode information indicating the determined intra prediction mode and output a bitstream of the video signal. The decoded picture buffer unit 110 is used to store reconstructed coding blocks in order for prediction reference. As the picture encoding progresses, reconstructed coding blocks will be continuously generated, and these reconstructed coding blocks will be stored into the decoded picture buffer unit 110.

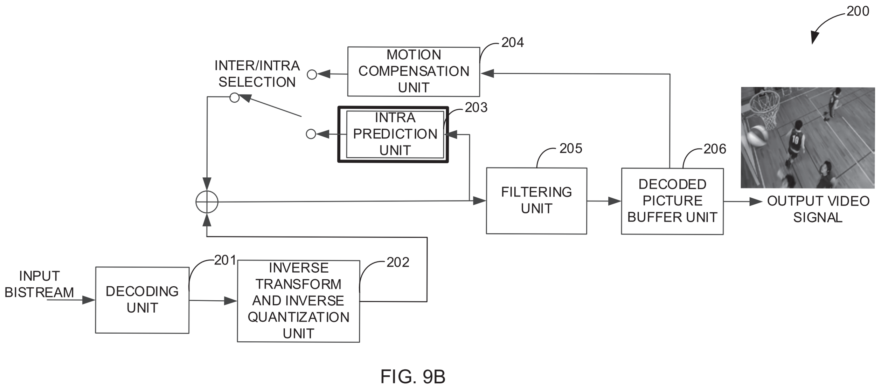

Referring to FIG. 9B, FIG. 9B is a schematic block diagram a decoder provided in embodiments of the disclosure. As illustrated in FIG. 9B, the decoder (which is specifically a "video decoder") 200 includes a decoding unit 201, an inverse transform and inverse quantization unit 202, an intra prediction unit 203, a motion compensation unit 204, a filtering unit 205, a decoded picture buffer unit 206, and the like. The decoding unit 201 can implement header information decoding and CABAC. The filtering unit 205 can implement deblocking filtering and SAO filtering. After the input video signal is encoded (as illustrated in FIG. 9A), the bitstream of the video signal is output. The bitstream is input into the decoder 200. First, decoded transform coefficients are obtained by the decoding unit 201. The decoded transform coefficients are processed by the inverse transform and inverse quantization unit 202, so as to generate a residual block in the sample domain. The intra prediction unit 203 can be used to generate prediction data of the current video coding block based on the determined intra prediction mode and data from the previous decoded block of the current frame or picture. The motion compensation unit 204 is used to determine prediction information for the coding block by analyzing motion vectors and other associated syntax elements, and use the prediction information to generate a prediction block of the video coding block that is being decoded. The decoded video block is formed by summing the residual block from the inverse transform and inverse quantization unit 202 and the corresponding prediction block generated by the intra prediction unit 203 or the motion compensation unit 204. The blocking artifacts of the decoded video signal are removed by the filtering unit 205, which can improve quality of the video. The decoded video block is then stored into the decoded picture buffer unit 206. The decoded picture buffer unit 206 is used to store reference pictures used for subsequent intra prediction or motion compensation, and is also used to output the video signal, that is, the restored original video signal is obtained.

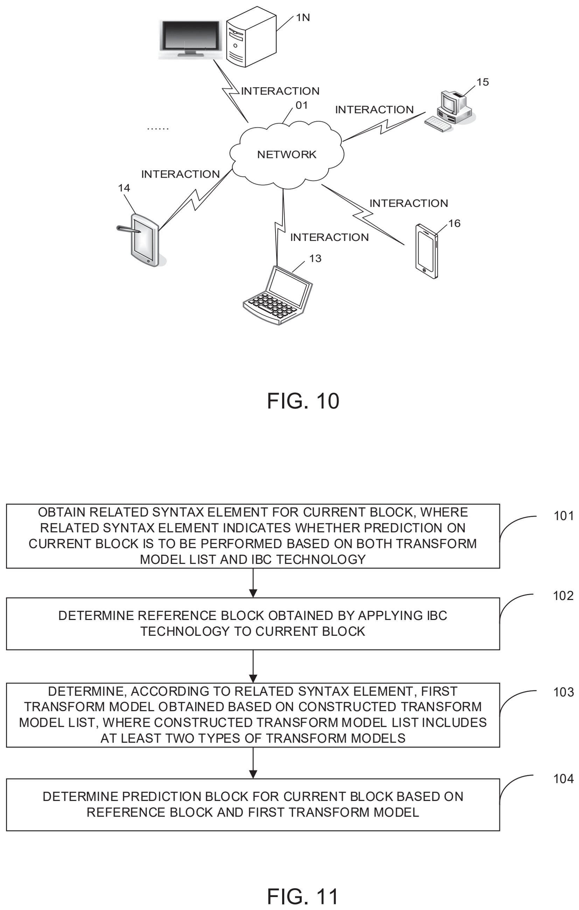

In addition, embodiments of the disclosure further provide a network architecture of a coding system that includes an encoder and a decoder. FIG. 10 is a schematic diagram illustrating a network architecture of a coding system provided in embodiments of the disclosure. As illustrated in FIG. 10, the network architecture includes one or more electronic devices 13 to 1$N$ and a communication network 01. The electronic devices 13 to 1$N$ can perform video interaction with each other via the communication network 01. During implementation, the electronic devices can be various types of devices with video coding functions. For example, the electronic devices can include smartphones, tablet computers, personal computers, personal digital assistants (PDAs), navigation devices, digital telephones, video telephones, televisions, sensing devices, servers, etc., which is not specifically limited herein. In addition, the decoder or encoder in embodiments of the disclosure can be the foregoing electronic devices.

It should be noted that, the method in embodiments of the disclosure is mainly applied to the intra estimation unit 102 and the intra prediction unit 103 illustrated in FIG. 9A, as well as the intra prediction unit 203 illustrated in FIG. 9B. That is, embodiments of the disclosure can be applied to an encoder, or can be applied to a decoder, or can even be applied to both an encoder and a decoder, which is not specifically limited in embodiments of the disclosure.

It should be further noted that, when applied to the intra prediction unit 103, the "current block" specifically refers to a coding block on which intra prediction is currently to be performed. When applied to the intra prediction unit 203, the "current block" specifically refers to a coding block on which intra prediction is currently to be performed.

In an embodiment of the disclosure, referring to FIG. 11, FIG. 11 is a flowchart of a decoding method provided in embodiments of the disclosure. As illustrated in FIG. 11, the method can include the following.

S101, a related syntax element(s) for a current block is obtained, where the related syntax element indicates whether prediction on the current block is to be performed based on both a transform model list and an IBC technology.

S102, a reference block obtained by applying the IBC technology to the current block is determined.

S103, a first transform model obtained based on a constructed transform model list is determined according to the related syntax element, where the constructed transform model list includes at least two types of transform models.

S104, a prediction block for the current block is determined based on the reference block and the first transform model.

It should be noted that, in embodiments of the disclosure, the decoding method is applied to scenarios involving IBC technology. In the decoding procedure of embodiments of the disclosure, after the reference block for the current block is determined, determination of the prediction block for the current block can be done before transform on the reference block or without transform on the reference block. Embodiments of the disclosure provide a method for performing prediction after transform on the reference block based on the constructed transform model list.

In embodiments of the disclosure, transform on the reference block can be performed by selecting a transform model from the transform model list. Alternatively, the transform on the reference block can be performed based on a preset transform type such as LIC transform, multi-model LIC transform, or filter transform. The transform model list includes at least two types of transform models.

It should be noted that, for a coding block which is to be coded by applying Inter, IBC, or Intra TMP, transform can be applied to a reference block to obtain a prediction block. Transform on the reference block can be as follows:

LIC transform: the relationship between a prediction-block sample Pred(x, y) and a reference-block sample ref(x, y) is expressed in formula (11):

$$\mathrm{Pred}(x, y) = \alpha \cdot \mathrm{ref}(x, y) + \beta \qquad (11)$$

Multi-model LIC transform: the relationship between a prediction-block sample Pred(x, y) and a reference-block sample ref(x, y) is expressed in formula (12):

$$\begin{cases} \mathrm{Pred}(x, y) = \alpha_1 \cdot \mathrm{ref}(x, y) + \beta_1, & \mathrm{ref}(x, y) <= \mathrm{threshold} \\ \mathrm{Pred}(x, y) = \alpha_2 \cdot \mathrm{ref}(x, y) + \beta_2, & \mathrm{else} \end{cases} \qquad (12)$$

*threshold* is a reference-sample threshold, and different parameters are applied for linear transform depending on whether a reference-block sample is greater than the threshold.

Filter transform: the relationship between a prediction-block sample Pred(x, y) and a reference-block sample is expressed in formula (2):

$$\mathrm{Pred}(x, y) = c0C + c1N + c2S + c3E + c4W + c5B \qquad (2)$$

C is a reference-block sample at *(x, y)*, *N* is an upper sample of sample C, S is a lower sample of sample C, W is a left sample of sample C, and E is a right sample of sample C, as illustrated in the following figure. B (Bias) is a fixed value, for example, *B* is the median of the sample range. c0 to c5 are filter coefficients.

It should be noted that, regarding filter transform, when applying it to reference samples in a certain region, some samples from outside the region are used as inputs. The external area of the region can be padded with samples from inside the region. Alternatively, if some samples from outside the region have already been reconstructed, the reconstructed values can be used directly.

Accordingly, in embodiments of the disclosure, based on the various transform methods described above, parameter information required (such as $\alpha_i$, $\beta_i$, $c_i$, threshold, etc.) can be stored as parameter information and a model type corresponding to the position of the coding block, for use in constructing a transform model candidate list for a subsequent IBC coding block.

In embodiments of the disclosure, in S101, during decoding, a bitstream can be obtained or parsed, to obtain the related syntax element for the current block. The related syntax element indicates whether prediction on the current block is to be performed based on a combination of the transform model list and the IBC technology. The related syntax element can include a variety of syntax elements.

In some embodiments of the disclosure, the related syntax element at least includes a second syntax element, where the second syntax element indicates whether the transform model list is to be applied to the current block for prediction.

It should be noted that, if the second syntax element indicates that the transform model list is not to be applied to the current block for prediction, it can mean that a decoder can transform the reference block by applying an existing preset transform type such as LIC transform, multi-model LIC transform, or filter transform, or may not transform the reference block, which is not limited in embodiments of the disclosure.

Exemplarily, in embodiments of the disclosure, the second syntax element can be represented by *cu_ibc_model_merge_flag*, which is a merge flag under the IBC mode.

In embodiments of the disclosure, the related syntax element can further include a first syntax element, where the first syntax element indicates a prediction mode for the current block using the IBC technology.

Exemplarily, in embodiments of the disclosure, the first syntax element can be represented by *pu_merge_flag,* which is a flag indicating the prediction mode for the current block using the IBC technology. The prediction mode using the IBC technology can include an AMVP (IBC-AMVP) mode or a merge (IBC-Merge) mode.

Regarding S102~S104, during decoding, when performing prediction based on IBC, the decoder parses the bitstream to obtain encoded information of block vectors. Based on a candidate block vector list constructed based on candidate blocks, the reference block for the current block when IBC technology is applied can be determined.

If the decoder determines, based on the related syntax element, that the transform model list is to be applied for prediction in the current decoding procedure, the decoder can determine the first transform model from the transform model list based on the related syntax element. Finally, the decoder applies transform to the reference block based on the first transform model to obtain the prediction block for the current block and then determines a prediction value of the prediction block. After parsing an encoded residual from the bitstream, the decoder determines a reconstructed value of the current block based on the prediction value and the encoded residual, thereby completing decoding of the current block.

In some embodiments of the disclosure, the decoder parses the bitstream to decode the first syntax element, determines, according to the first syntax element, the prediction mode for the current block using the IBC technology, and decodes the second syntax element.

In embodiments of the disclosure, if the value of the decoded first syntax element is a first value, it indicates that the prediction mode for the current block using the IBC technology is an AMVP mode. If the value of the decoded first syntax element is a second value, it indicates that the prediction mode for the current block using the IBC technology is a merge mode.

It should be noted that, the manner for decoding the second syntax element can differ under different IBC technology-based prediction modes.

In embodiments of the disclosure, if the value of the decoded second syntax element is the first value, it indicates that the transform model list is to be applied to the current block for prediction. If the value of the decoded second syntax element is the second value, it indicates that the transform model list is not to be applied to the current block for prediction.

It should be noted that, in embodiments of the disclosure, the first value is different from the second value, and the first value and the second value can be in the form of parameters or numerical values. Specifically, first flag information can be a parameter signalled in the profile or the value of a flag, which is not specifically limited herein.

Exemplarily, for the first value and the second value, the first value can be set to 1, and the second value can be set to 0; alternatively, the first value can be set to 0, and the second value can be set to 1; alternatively, the first value can be set to true, and the second value can be set to false; alternatively, the first value can be set to false, and the second value can be set to true, which is not specifically limited herein.

In embodiments of the disclosure, the flag signalled into the bitstream is taken as an example, and it is assumed that the first value is set to 0 (false) and the second value is set to 1 (true). In this case, if the value of the first syntax element is 0 (false), it can be determined that the AMVP mode is to be applied to the current block; and if the value of the first flag information is 1 (true), it can be determined that the merge mode is to be applied to the current block. If the value of the second syntax element is 0 (false), it can be determined that a transform model list-based prediction mode is not to be applied to the current block, that is, the transform model list-based decoding method provided in the disclosure is not to be applied. If the value of the first flag information is 1 (true), it can be determined that the transform model list-based prediction mode is to be applied to the current block, that is, the transform model list-based decoding method provided in the disclosure is to be applied.

It should be noted that, the form of the first value and the second value is not limited in embodiments of the disclosure. In embodiments of the disclosure, the first value being 0 (false) and the second value being 1 (true) is taken as an example for illustration.

The decoder determines, based on the value of the decoded second syntax element, whether the transform model list is to be applied for prediction, and thus can determine the first transform model for prediction and whether transform is required.

It should be noted that, the transform model list includes multiple transform models. During encoding of each block, different transform models can be selected each time, which can improve prediction diversity and allow to select an appropriate transform method for each block, instead of applying a unified preset transform model to implement the same transform procedure, thereby improving decoding performance.

In some embodiments of the disclosure, a flowchart of an optional decoding method provided in embodiments of the disclosure is provided. The method can include the following.

S201, a first syntax element is decoded.

In embodiments of the disclosure, the decoding procedure in S201 is consistent with the procedure in the foregoing embodiments, which will not be repeated herein.

S202, if the value of the first syntax element is a first value, it is determined that a prediction mode for a current block using an IBC technology is an AMVP mode, and a third syntax element (*cu_ibc_lic_flag*) is decoded, where the third syntax element indicates whether a transform technology is to be applied for prediction, and the third syntax element belongs to a related syntax element(s).

It should be noted that, if the first syntax element is represented by *pu_merge_flag,* it indicates that the prediction mode is a merge mode. Then, if *pu_merge_flag* decoded by the decoder has the first value (false), the decoder can determine that the AMVP mode is to be applied to the current block. In this case, the decoder continues parsing the bitstream to decode the third syntax element. The related syntax element includes the third syntax element, where the third syntax element indicates whether the transform technology is to be applied for prediction.

Exemplarily, in embodiments of the disclosure, the third syntax element can be represented as *cu_ibc_lic_flag.* *cu_ibc_lic_flag* indicates whether transform is to be performed on a reference block for prediction. If the third syntax element is true, transform is to be performed; if the third syntax element is false, no transform is to be performed. However, even if transform is to be performed on the reference block, it is necessary to further determine whether the transform model list is to be applied for transform, because there may also be the case where the same preset transform model is applied to all blocks to implement the same transform operation.

It should be noted that, the value of the third syntax element can also be the first value and the second value, etc., which is similar to the setting of the first syntax element and the second syntax element, and will not be repeated herein.

S203, if the value of the third syntax element is the second value, the second syntax element is decoded.

S204, if the value of the second syntax element is the second value indicating to apply the transform model list to the current block for prediction, a fourth syntax element is decoded to determine index information of a transform model, and skip the process of inheriting an LIC flag from a merge candidate block for the current block, where the fourth syntax element indicates a model index of the transform model in the transform model list, and the related syntax element further includes the fourth syntax element.

In embodiments of the disclosure, the third syntax element decoded by the decoder can have the first value (false) or the second value (true). If the value of the decoded third syntax element is the second value, it indicates that prediction on the current block is to be performed by transforming the reference block. In this case, the decoder needs to decode the second syntax element to determine whether to select a transform model appropriate for the current block from the transform model list for transform or apply a preset single transform model directly for transform.

In embodiments of the disclosure, during decoding of the second syntax element, if the value of the second syntax element decoded by the decoder is the second value (true) indicating to apply the transform model list to the current block for prediction, the decoder can continue parsing the bitstream to decode the fourth syntax element in the related syntax element, to obtain the index information of the transform model in the transform model list, where the fourth syntax element indicates the model index of the transform model in the transform model list.

Exemplarily, in embodiments of the disclosure, the decoder can use *cu_ibc_model_merge_idx* to represent the fourth syntax element.

S205, the first transform model is determined from the constructed transform model list based on the index information of the transform model.

S206, the prediction block for the current block is determined based on the reference block and the first transform model.

In embodiments of the disclosure, when decoding the fourth syntax element, the decoder can determine, from the constructed transform model list, the first transform model corresponding to the index information of the transform model indicated by the fourth syntax element. That is, during prediction of the current block, the decoder determines the first transform model that is appropriate for the current block from the transform model list. In this way, the decoder can transform the reference block based on the first transform model to obtain the prediction block for the current block, and then proceed to a subsequent decoding procedure based on the prediction block.

Exemplarily, in the IBC-AMVP mode, a transform model candidate list is constructed for the current block. A prediction mode and a transform model for the current block are determined according to block-level mode flags (the first syntax element, the second syntax element, and the third syntax element) and a candidate index (the fourth syntax element) signalled in the bitstream.

The syntax elements are as follows:

```
if( !pu_merge_flag)
{
cu_ibc_lic_flag
if( cu_ibc_lic_flag) {
       cu_ibc_model_merge_flag
       if( cu_ibc_model_merge_flag) {
           cu_ibc_model_merge_idx
       }
}
}
```

The decoding procedure is as follows. Related elements for an IBC-based prediction mode are decoded. *cu_ibc_lic_flag* is decoded. If *cu_ibc_lic_flag* is true, it indicates that the reference block for the coding block needs to be transformed. Then *cu_ibc_model_merge_flag* is decoded. If *cu_ibc_model_merge_flag* is true, it indicates to determine the transform model from a constructed transform model candidate list. Further, *cu_ibc_model_merge_idx* is decoded to determine which transform model in the list is to be applied. If *cu_ibc_model_merge_flag* is false, it indicates to apply the IBC-LIC method to the coding block. If *cu_ibc_lic_flag* is false, it indicates to apply other IBC-based prediction methods.

In some embodiments of the disclosure, *cu_ibc_lic_flag* and *cu_ibc_model_merge_flag* can be encoded through context model-based entropy coding. The value range of *cu_ibc_model_merge_idx* can be less than or equal to the maximum length of a transform model candidate list and can be encoded though variable-length coding, in which shorter codewords corresponds to smaller indexes. For example, if the value range of *cu_ibc_model_merge_idx* is n, *cu_ibc_model_merge_idx* can be encoded through truncated binary coding. For example, the codewords are illustrated in Table 4. Bits under different codewords in Table 4 can be encoded through context model-based encoding (*Intra_tmp_idx*) or equiprobable encoding.

Table 4

| Intra_tmp_idx | Binary code | | | | |
|---|---|---|---|---|---|
| 0-1 | 0 | 0 | X | | |
| 2-3 | 0 | 1 | X | | |
| 4-11 | 1 | X | X | X | |

In some embodiments of the disclosure, the decoder can also determine the first transform model from the constructed transform model list based on the index information of the transform model as follows. At least one other transform model in the transform model list is indicated if a fourth syntax element for the transform model is a third value, where the other transform models are transform modes corresponding to other reference blocks.

It should be noted that, other IBC-based reference-block-transform methods can also be used as model candidates in the transform model list, and these methods as well as inherited available transform models can be encoded by using a unified syntax element. In other words, a single syntax element can be used to indicate indexes of transform methods corresponding to other reference blocks, and the value of the index may indicate the selection of other LIC models, thus realizing reuse of syntax element.

In some embodiments of the disclosure, the decoding method further includes the following.

S207, the second syntax element is decoded if the value of the third syntax element is the first value.

In embodiments of the disclosure, whether to decode the second syntax element can be determined by changing the meaning of the third syntax element. For example, if the third syntax element is true, it indicates that no transform is applied to the reference block. If the third syntax element is false, it indicates that transform is applied to the reference block. In this case, the decoder can decode the second syntax element if the value of the third syntax element is the first value (false).

S207 is an alternative implementation to S203, and embodiments of the disclosure are not limited in this regard.

Exemplarily, the syntax elements are as follows:

```
if( !pu_merge_flag)
{
cu_ibc_lic_flag
if( !cu_ibc_lic_flag) {
      cu_ibc_model_merge_flag
      if( cu_ibc_model_merge_flag) {
            cu_ibc_model_merge_idx
}
}
```

*cu_ibc_lic_flag* is decoded. If *cu_ibc_lic_flag* is true, it indicates to apply the IBC-LIC method to the coding block. If *cu_ibc_lic_flag* is false, then *cu_ibc_model_merge_flag* is decoded. If *cu_ibc_model_merge_flag* is true, it indicates to determine the transform model based on a constructed transform model candidate list. Further, *cu_ibc_model_merge_idx* is decoded to determine which transform model in the list is to be applied. If *cu_ibc_model_merge_flag* is false, it indicates to apply other IBC-based prediction methods.

S208, a transform model list is constructed if the value of the second syntax element is the second value.

In embodiments of the disclosure, if the second syntax element decoded by the decoder is true, it indicates that a transform model list is to be applied to the current block for prediction. In this case, the transform model list needs to be constructed.

In some embodiments of the disclosure, the decoder constructs the transform model list as follows. At least one different transform model is sequentially added to an initial transform model list to obtain the transform model list, where the at least one transform model includes at least one of: a second transform model corresponding to a sample in at least one neighbouring position of the current block, a third transform model corresponding to a sample in at least one non-neighbouring position of the current block, a fourth transform model applied in a history decoding procedure, an available transform model in temporal domain, or a preset transform model.

In embodiments of the disclosure, when sequentially adding the at least one different transform model to the initial transform model list to obtain the transform model list, the models can be added in any order among the second transform model, the third transform model, the fourth transform model, the available transform model in temporal domain, and the preset transform model. In addition, any one type of transform model can include multiple models.

It should be noted that, the order in which the at least one transform model is added when constructing the transform model candidate list can be different. For example, a history available transform model can be added firstly, followed by an available transform model for a non-neighbouring position, etc. Embodiments of the disclosure are not limited in this regard.

It should be noted that, the transform model list has a maximum length, and embodiments of the disclosure are not limited in this regard.

Exemplarily, if *cu_ibc_model_merge_flag* is true, a transform model candidate list is constructed for the current coding block, where the maximum length of the transform model candidate list is N. The list can include the following candidates sequentially:

an available transform model for a neighbouring position (second transform model);

an available transform model for a non - neighbouring position (third transform model);

a history available transform model (fourth transform model);

an available transform model in temporal domain; and

a default transform model (preset transform model).

The default transform model can include: an LIC transform model with parameters $\alpha_0$ and $\beta_0$, and a transform model obtained by adjusting an existing transform model in the list. When constructing the transform model list, duplicate checking can be performed. For example, a transform model can be added to the list only if the transform model is different from all existing candidates in the list.

Exemplarily, when constructing the transform model candidate list for the current block, an available transform model candidate in temporal domain can be added. For example, the list can be constructed in the following order:

1) available transform model for a neighbouring position;

2) available transform model in temporal domain;

3) available transform model for a non-neighbouring position;

4) history available transform model;

5) default transform model.

In embodiments of the disclosure, the preset transform model includes: a model corresponding to a preset model parameter, or a model obtained by applying an offset to at least one of: the second transform model, the third transform model, the fourth transform model, the model corresponding to the preset model parameter, or the available transform model in temporal domain.

It should be noted that, the "offset" herein refers to an offset applied to any parameter in any transform model.

It should be noted that, if the maximum length is not reached, a new transform model can be obtained by applying an offset to a parameter in an existing candidate transform model, and then added to the transform model list.

The transform model in temporal domain is obtained by checking multiple neighbouring samples in a collocated picture in a reference picture list. In addition, a translated available transform model candidate in temporal domain can also be added. Exemplarily, the list can be constructed in the following order:

1) available transform model for a neighbouring position;

2) available transform model in temporal domain;

3) available transform model for a non-neighbouring position;

4) translated available transform model in temporal domain;

5) history available transform model;

6) default transform model.

In the above procedure, a motion vector for translation is firstly obtained based on a neighbouring block of the current block, and then the vector is applied to each check point in a temporal-domain candidate to obtain new check points, thus obtaining the translated available transform model in temporal domain. For the above procedure of obtaining a temporal-domain candidate, reference can be made to the procedure of obtaining a temporal-domain candidate in inter prediction.

In some embodiments of the disclosure, a prediction type for blocks corresponding to the second transform model, the third transform model, and the fourth transform model in the transform model list is either intra TMP or an IBC technology.

That is, the second transform model, the third transform model, and the fourth transform model can be applied to a prediction block obtained through IBC or IntraTMP, or can be applied only to a prediction block obtained through IBC, or can be applied only to a prediction block obtained through IntraTMP. Embodiments of the disclosure are not limited in this regard.

In embodiments of the disclosure, the operations of obtaining at least one transform model and adding the at least one transform model to the transform model list can be implemented only if a transform condition is satisfied.

In some embodiments of the disclosure, for a sample in any neighbouring position of the current block or a sample in any non-neighbouring position of the current block, if the sample satisfies a transform condition, a second transform model corresponding to the neighbouring position of the current block is obtained, or a third transform model corresponding to a sample in any non-neighbouring position of the current block is obtained, where the transform condition includes at least one of: the IBC technology is applied to a block that the sample belongs to, a transform model flag is valid, or the size of the block that the sample belongs to satisfies a first preset size.

Exemplarily, taking the transform model flag being valid as an example, whether the at least one transform model can be obtained can be determined as follows. A transform model is obtained only if the following conditions are satisfied: a coding unit at the position is coded based on an IBC mode or IntraTMP mode, a prediction block for the coding unit is obtained by applying transform to a reference block, and a transform model is obtained when a transform model flag (similar to the LIC flag) is valid. The transform type is stored as a flag, which facilitates look-up of the flag when constructing a list for a subsequent block, but the flag is not the one transmitted by an encoder (the flag transmitted by the encoder can also be used, but in this case, the syntax element is different). In this case, the model used for transform belongs to the at least one transform model. In addition, the at least one transform model is determined based on whether the coding unit at the position satisfies a predefined size condition.

In some embodiments of the disclosure, the at least one different transform model includes at least one of: at least one transform model has different transform types, at least one transform model has different model parameters, or the same transform type applies different template regions.

Exemplarily, whether transform models are the same can be determined through at least one of the following methods. If the transform models differ in transform type, the transform models are different; and LIC transforms applying different template regions are considered to be different types. When the transform models belong to LIC transform, if the transform models differ in coefficient $\alpha$, the transform models are different. When the transform models belong to multi-model LIC transform, if the transform models differ in any $\alpha_i$, the transform models are different. When the transform models belong to Filter transform, if the transform models differ in any $c_i$, the transform models are different.

In some embodiments of the disclosure, the decoder adds sequentially the at least one different transform model to the initial transform model list to obtain the transform model list as follows. The decoder adds sequentially the at least one different transform model to the initial transform model list to obtain an intermediate transform model list, and rearranges the intermediate transform model list to obtain the transform model list.

It should be noted that, there is no restriction on the order of adding sequentially the at least one different transform model. The rearrangement procedure is optional, and embodiments of the disclosure are not limited in this regard.

In some embodiments of the disclosure, the decoder rearranges the intermediate transform model list to obtain the transform model list as follows. Each transform model in the intermediate transform model list is traversed to determine an offset value corresponding to each transform model. Prediction is performed on a reference-block template by applying each transform model, to determine a reference-block template prediction corresponding to each transform model. An error value between the reference-block template prediction corresponding to each transform model and a current-block template is determined. A template error value corresponding to each transform model is determined based on the error value and the offset value corresponding to each transform model. The transform models are rearranged based on the template error values corresponding to the transform models to obtain the transform model list.

The smaller the template error value of each transform model, the smaller its corresponding index in the transform model list. If the reference-block template is unavailable, the error value is determined to be a maximum value.

It should be noted that, for each transform model in the transform model list, the offset value is calculated based on the current-block template and the reference-block template in order for subsequent prediction value calculation. Here, all the transform models need to be traversed to calculate the offset corresponding to each transform model. It should be noted that, if rearrangement is skipped, only an offset corresponding to a selected transform model needs to be calculated, instead of calculating offsets for all candidates. When rearranging the transform model candidate list, the current-block template is defined as N rows neighbouring the top of the current block and M columns neighbouring the left of the current block, and corresponding neighbouring regions of the reference block serve as the reference-block template. For a certain transform model in the transform model list, the transform model is applied to the reference-block template to obtain a reference-block template prediction, thus obtaining an error value between the reference-block template prediction and the current-block template. The error value can be calculated by means of SAD, and a template error value is obtained by adding the offset value to the error value. Finally, the list is rearranged according to the template error value corresponding to each transform model. For example, a transform model with a smaller template error value corresponds to a smaller model index. If the reference-block template is unavailable, the SAD is set to the maximum value, such as the maximum value of an integer, etc.

It can be understood that, through rearrangement, a transform model with higher chance to be selected and smaller template error value can be given a smaller index. Once the optimal transform model is selected, fewer codewords need to be transmitted during coding, thereby saving codewords.

In some embodiments of the disclosure, transform models of different transform types correspond to different reference-block template regions, and an error value corresponding to each transform model is an average template error value per sample in a reference-block template corresponding to the transform model.

It should be noted that, when calculating the template error value corresponding to each transform model, different template regions may be used for different transform types, and the average template error value can be calculated based on the number of samples in the template. This can also be extended to offset calculation, in which different template regions can be used for different transform types. For example, if the transform type is an LIC transform in which the left template is applied, the left template can be applied when calculating the offset.

In some embodiments of the disclosure, first position information (top-left coordinates) of the current block and the current size of the current block are obtained. At least one neighbouring position and at least one non-neighbouring position of the current block are determined based on the first position information and the current size.

It should be noted that, determination of the neighbouring position(s) and the non-neighbouring position(s) can be the same as the method for constructing a Merge list for an inter-coding block and the method for constructing an IBC Merge list.

Exemplarily, the neighbouring position and the non-neighbouring position can be determined based on the position and size of the current block. For example, if the top-left coordinates of the current block are *(X,* Y) and the width and height of the current block are *(W, H),* then the neighbouring positions can be *(X-1, Y+H-1), (X+W-1, Y*-1), *(X-1, Y+H),* and *(X-1, Y*-1). For example, non-neighbouring positions can be as follows:

$$a_{0i} = (X - W * i - 1, Y + H * (i + 1) - 1), 1 <= i <= 7 \qquad (13)$$

$$a_{1i} = (X + W * (i + 1) - 1, Y - H * i - 1), 1 <= i <= 7 \qquad (14)$$

$$a_{2i} = \left(X + \frac{W}{2}, Y - H * i - 1\right), 1 <= i <= 7 \qquad (15)$$

$$a_{3i} = \left(X - W * i - 1, Y + \frac{H}{2}\right), 1 <= i <= 7 \qquad (16)$$

$$a_{4i} = (X - W * i - 1, Y - H * i - 1) \qquad , 1 <= i <= 7 \qquad (17)$$

$$a_{5i} = (X - 1, Y + H * (i + 1) - 1) \qquad , 2 <= i <= 7 \qquad (18)$$

$$a_{6i} = (X + W * (i + 1) - 1, Y - 1) \qquad , 2 <= i <= 7 \qquad (19)$$

$$a_{7i} = \left(X + \frac{-W*i-1}{2}, Y + H * (i + 1) - 1\right) \quad , 2 <= i <= 7 \qquad (20)$$

$$a_{8i} = \left(X + W * (i + 1) - 1, Y + \frac{-H*i-1}{2}\right) \quad , 2 <= i <= 7 \qquad (21)$$

These non-neighbouring positions are checked in the order of $a_{01}, a_{11}, \ldots, a_{41}, a_{02}, \ldots a_{82}, \ldots, a_{87}$.

The following non-neighbouring positions can also be checked:

$$\text{offsetX} = \frac{W}{2} + \left(\left(W * (i + 1) - 1 - \frac{W}{2}\right) \gg 1\right) \qquad (22)$$

$$\text{offsetY} = \frac{H}{2} + \left((H * (i + 1) - 1 - \frac{H}{2}) \gg 1\right) \qquad (23)$$

$$b_{0i} = (X - W * i - 1, Y + \text{offsetY}), 1 <= i <= 7 \qquad (24)$$

$$b_{1i} = (X + \text{offsetX}, Y - H * i - 1), 1 <= i <= 7 \qquad (25)$$

$$b_{2i} = \left(X - W * i - 1, Y + \text{offsetY} + ((\frac{H}{2} - \text{offsetY}) \gg 1)\right), 1 <= i <= 7 \qquad (26)$$

$$b_{3i} = \left(X + \text{offsetX} + \left(\left(\frac{W}{2} - \text{offsetX}\right) \gg 1\right), Y - H * i - 1\right), 1<=i<=7 \qquad (27)$$

In some embodiments of the disclosure, a derived LIC model is obtained and the LIC model is added to the transform model list.

It should be noted that, when constructing the transform model list, the first LIC model in the list can be the LIC model inherited from the neighbouring position or an LIC model derived in other ways.

In embodiments of the disclosure, the history available transform model may overlap with an available transform model(s) corresponding to the neighbouring position and an available transform model(s) corresponding to the non-neighbouring position. However, the history available transform model corresponds to a larger region, and the history available transform model is the most recent history transform model for the most recent coding block in terms of coding order. The decoder maintains a history transform model list. History available transform model obtained after duplicate removal of the history transform model list is added to the transform model candidate list.

In some embodiments of the disclosure, a history transform model applied in a decoding procedure is obtained. If a model same as the history transform model exists in a history transform model list, the same model is removed from the history transform model list, and the history transform model is added to the 1st position in the history transform model list. If no model same as the history transform model exists in the history transform model list, the history transform model is added to the 1st position in the history transform model list.

In some embodiments of the disclosure, the history transform model is added to the 1st position in the history transform model list as follows. If the history transform model list satisfies a first preset list length, a transform model at the last position in the history transform model list is removed and then the history transform model is added to the 1st position in the history transform model list.

It should be noted that, the fourth transform model is determined from history transform models sequentially from the 1st position to the last position.

It should be noted that, during coding, a list including transform models for coded blocks can be maintained, which can be referred to as the history transform model list. Based on the history transform model list, a history transform model candidate (i.e., the fourth transform model) can be added when constructing a transform model list for a subsequent coding block. The history transform model list has a maximum length of K and is a first-in-first-out list. That is, a transform model firstly added is at the last position (bottom) in the list, while the most recently added transform model is at the 1st position (top) in the list. After encoding of an IBC or IntraTMP block is completed, if an available transform model exists, the transform model can be added to the history list. When adding the transform model, whether a model same as the transform model exists in the list is determined. If the model same as the transform model exists in the list, the duplicate model in the history list is removed, and then the new model is added to the top of the history list. If the history list has reached the maximum length during addition, a model at the bottom of the list is removed and then the current model is added. Subsequently, when constructing the candidate transform model list and adding the history transform model, transform models in the history transform model list are attempted sequentially from the top to the bottom of the list.

In some embodiments of the disclosure, if the size of a block corresponding to a history transform model to-be-added satisfies a second preset size, the history transform model list is updated with the history transform model.

That is, the history transform model to-be-added is added to the history transform model list only if the size of the block corresponding to the history transform model satisfies a predefined size condition.

In some embodiments of the disclosure, after decoding the second syntax element if the value of the third syntax element is the first value, a fifth syntax element is decoded when the value of the third syntax element is the second value, where the fifth syntax element indicates an index of an LIC model used in a multi-mode LIC technology; a sixth transform model is determined based on the fifth syntax element; and the prediction block for the current block is determined based on the reference block and the sixth transform model.

Alternatively, after decoding the second syntax element if the value of the third syntax element is the second value, a fifth syntax element is decoded when the value of the third syntax element is the first value, where the fifth syntax element indicates an index of an LIC model used in a multi-mode LIC technology; a sixth transform model is determined based on the fifth syntax element; and the prediction block for the current block is determined based on the reference block and the sixth transform model.

The fifth syntax element can be represented as *cu_ibc_lic_idc.*

Exemplarily, if( !pu_merge_flag)

```
{
cu_ibc_lic_flag
if( !cu_ibc_lic_flag) {
        cu_ibc_model_merge_flag
        if( cu_ibc_model_merge_flag) {
             cu_ibc_model_merge_idx
        }
        else{
             cu_ibc_lic_idc
        }
}
}
```

*cu_ibc_lic_idc* represents an index of an IBC-LIC sub-method in the multi-mode IBC-LIC technology.

Alternatively,

```
if( !pu_merge_flag)
{
cu_ibc_lic_flag
if( cu_ibc_lic_flag) {
        cu_ibc_model_merge_flag
        if( cu_ibc_model_merge_flag) {
             cu_ibc_model_merge_idx
        }
        else {
             cu_ibc_lic_idc
}
}
```

*cu_ibc_lic_idc* represents an index of an IBC-LIC sub-method in the multi-mode IBC-LIC technology.

It can be understood that, the transform model list includes various types of transform models. During encoding of each block, different transform models can be selected each time. As such, it is possible to improve prediction diversity, and select an appropriate transform model for each block, rather than apply a unified preset transform model to perform the same transform operation, thus improving decoding performance. Even if no transform model list is applied for transform, an LIC transform model or multi-mode IBC-LIC can be adopted for transform, thereby ensuring decoding efficiency.

In some embodiments of the disclosure, a flowchart of an optional decoding method is provided. The decoding method can include the following.

S301, a first syntax element is decoded.

In embodiments of the disclosure, the decoding procedure in S301 is consistent with that in the foregoing embodiments, and thus will not be repeated herein.

S302, if the value of the first syntax element is a second value, determine that a prediction mode for a current block using an IBC technology is a merge mode, and a second syntax element is decoded.

It should be noted that, if the first syntax element is represented as *pu_merge_flag,* it indicates that the prediction mode is the merge mode. Then, if *pu_merge_flag* decoded by the decoder is the second value (true), the decoder can determine that the optimized merge mode is to be applied to the current block. In this case, the decoder continues to parse a bitstream to decode the second syntax element.

S303, if the value of the second syntax element is the second value indicating to apply a transform model list to the current block for prediction, a fourth syntax element *(cu_ibc_model_merge_idx)* is decoded to determine index information of a transform model, and skip inheriting an LIC flag from a merge candidate block for the current block, where the fourth syntax element indicates a model index of the transform model in the transform model list, and the related syntax element further includes the fourth syntax element.

S304, a first transform model is determined from a constructed transform model list based on the index information of the transform model.

S305, a prediction block for the current block is determined based on a reference block and the first transform model.

In embodiments of the disclosure, the decoding procedure in S303~S305 is consistent with that in S204~S206 in the foregoing embodiments, and thus will not be repeated herein.

Exemplarily, in an IBC-Merge mode, a transform model candidate list is constructed for a current coding block. A prediction mode and a transform model for the current coding block are determined according to block-level mode flags (the first syntax element, and the second syntax element) and a candidate index (the fourth syntax element) signalled into the bitstream.

The syntax elements are as follows:

```
if( pu_merge_flag)
{ cu_ibc_lic_flag
cu_ibc_model_merge_flag
if( cu_ibc_model_merge_flag) {
      cu_ibc_model_merge_idx
}
}
```

If *cu_ibc_model_merge_flag* is true, then apply the transform model selected according to *cu_ibc_model_merge_idx* to the reference block for transform. The decoding procedure is the same as that in the foregoing embodiments.

In some embodiments of the disclosure, the decoder determines the prediction block for the current block based on the reference block and the first transform model as follows. Prediction is performed on a reference-block template for the current block by applying the first transform model, to determine prediction values of samples in the reference-block template. A total error value between the prediction values of the samples and samples in a current-block template is determined. A first offset value is obtained by dividing the total error value by the number of the samples. The reference block is transformed by applying the first transform model, and the prediction block for the current block is obtained by compensating a transform result corresponding to each sample with the first offset value. Alternatively, an updated first transform model is obtained by compensating a parameter in the first transform model with the first offset value, and the reference block is transformed by applying the updated first transform model.

It should be noted that, if the first transform model is an LIC model or multi-mode LIC, compensation of the parameter in the first transform model with the first offset value refers to compensation of $\beta$ in the transform model to obtain the updated first transform model with updated $\beta$.

It should be noted that, before using the first transform model in the transform model list, an offset value *offset* can be calculated based on sample values of the current block and sample values of a reference-block template region (matching template), to adjust the prediction values. For example:

Assuming the matching template has N samples, a template prediction *PredL* for each sample is calculated based on the reference-block template, thereby calculating a total difference *totalDiff* between the template predictions and the samples in the current-block template Rec as well as the offset value *offset,* as illustrated in formula (28) and formula (29):

$$totalDiff = \sum(Rec - Pred) \qquad (28)$$

$$offset = totalDiff / N \qquad (29)$$

The final prediction value can be a transformed prediction value plus the offset within the block. For example, if LIC transform is applied, the final prediction value is illustrated in formula (30):

$$Pred(x, y) = \alpha \cdot ref(x, y) + \beta + offset \qquad (30)$$

In embodiments of the disclosure, calculations in the embodiments can be implemented through integer-based addition, multiplication, and shift operations (rounding can be implemented during shift operations), and embodiments of the disclosure are not limited in this regard.

In some embodiments of the disclosure, if the first transform model is an LIC model, a sample value of a first reconstructed region neighbouring a current coding block and a sample value of a second reconstructed region neighbouring the reference block are obtained. A first parameter ($\alpha$) of the LIC model is derived based on the sample value of the first reconstructed region and the sample value of the second reconstructed region, and a second parameter ($\beta$) is determined according to the first parameter. A third transform model is determined based on the original first parameter and the second parameter of the LIC model. The reference block is transformed by applying the third transform model, to obtain the prediction block for the current block (implies *offset=0*).

It should be noted that, the method for calculating the offset can adopt the method for parameter derivation in LIC technology ($\alpha$ and $\beta$ are derived based on the template region. $\alpha$ is firstly derived based on minimum mean-square error (MMSE), and then $\beta$ is derived based on $\alpha$ and a sample value within the region). That is, in LIC technology, $\alpha$ and $\beta$ can be derived. When calculating the offset, $\alpha$ is obtained from a selected transform model ($\alpha$ is inherited), and $\beta$ obtained through calculation is used as $\beta$. As such, the offset thus calculated is bias-free, which can be considered that *offset* = 0.

In some embodiments of the disclosure, if the second syntax element corresponding to the merge candidate block for the current block indicates to apply the transform model list for prediction (i.e., *cu_ibc_model_merge_flag* for the reference is true), an LIC flag for the current block is determined to have the second value.

It should be noted that, when constructing the Merge list for an IBC coding block, a merge candidate is constructed with reference to a prediction unit (PU) at a certain position. If *cu_ibc_model_merge_flag* for the PU is true, then for the next block such as a block neighbouring the right, an LIC flag for the merge candidate can be set to true and the merge candidate can be used as a candidate for a Merge list for the next block.

Then, the decoder determines the prediction block for the current block based on the reference block and the first transform model as follows. Secondary transform is performed on the reference block by applying the first transform model and an LIC transform model indicated by the LIC flag, to determine the prediction block for the current block. Alternatively, the reference block is transformed by applying an LIC transform model derived from a current-block template and a reference-block template, to determine the prediction block for the current block.

It should be noted that, if the LIC flag is true and *cu_ibc_model_merge_flag* is also true, two transforms can be performed sequentially, in any order. If the merge candidate is selected for an IBC coding block, an LIC flag for the coding block is true, which indicates to perform LIC transform on the reference block, where linear parameters are derived from the current-block template and the reference-block template.

In some embodiments of the disclosure, if the second syntax element corresponding to the merge candidate block for the current block indicates to apply the transform model list for prediction (i.e., *cu_ibc_model_merge_flag* for the reference is true), an LIC flag for the current block is determined to be the first value.

It should be noted that, if *cu_ibc_model_merge_flag* for the reference is true, the specific value that is set for the LIC flag for the current block is not unique, and embodiments of the disclosure are not limited in this regard.

When constructing the Merge list for the IBC coding block, a merge candidate is constructed with reference to a PU at a certain position. *cu_ibc_model_merge_flag* for the PU can be ignored, that is, whether LIC transform is to be applied to the merge candidate does not depend on *cu_ibc_model_merge_flag* for the PU. Coding of a subsequent block does not depend on *cu_ibc_model_merge_flag.* That is, even if *cu_ibc_model_merge_flag* is true, the LIC flag for the merge candidate can be set to false.

Based on illustration of the foregoing embodiments, in embodiments of the disclosure, the decoder can also decode the second syntax element as follows. The second syntax element is decoded based on decoded information, where the decoded information includes at least one of: the size of the current block, a CIIP flag for the current block, a geometric partitioning mode (GPM) flag for the current block, a merge mode with block vector differences (MBVD) flag for the current block, a skip flag for the current block, or a TM_merge flag for the current block.

In some embodiments of the disclosure, the second syntax element is decoded if the decoded information satisfies a first decoding condition, where the first decoding condition includes at least one of: the value of the CIIP flag is the first value (false), the value of the GPM flag is the first value (false), the value of the MBVD flag is the first value (false), the value of the skip flag is the first value (false), the value of the TM_merge flag is the first value (false), the size of the current block is less than a third preset size, or the area of the current block is greater than a first preset area threshold.

Exemplarily, whether to decode the flag *cu_ibc_model_merge_flag* depends on whether coded information satisfies a certain condition, for example, whether the width and height (that is, the size) of the current block are within a specific range. If the condition is not satisfied, *cu_ibc_model_merge_flag* is false, and decoding of *cu_ibc_model_merge_idx* is skipped. For instance, this may depend on flags such as the CIIP flag for the current block, the GPM flag for the current block, the MBVD flag for the current block, the TM_merge flag for current block, and the skip flag for current block.

Based on the width and height (that is, the size) of the current block and the decoding method flag for the current block, the decoding procedure can be as follows:

```
if( pu_merge_flag)
{
if( !pu_ibcCiip_flag && !pu_ibcGpm_flag && !pu_tmMerge_flag
&& !cu_skip_flag && cu_width *cu_height >= MAX_SIZE && cu_width <= MAX_WIDTH &&
cu_height <= MAX_HEIGHT) {
        cu_ibc_model_merge_flag
        if( cu_ibc_model_merge_flag) {
            cu_ibc_model_merge_idx
        }
    }
}
```

The condition for determining whether to decode *cu_ibc_model_merge_flag* may be different in the IBC-AMVP mode and in the IBC-Merge mode, and embodiments of the disclosure are not limited in this regard. In addition, transform model list sizes, index lengths, and index coding methods in the two modes may be the same or different, which is not limited in embodiments of the disclosure.

It should be noted that, whether to decode *cu_ibc_model_merge_flag* can depend on other mode flags decoded, and embodiments of the disclosure are not limited in this regard.

In some embodiments of the disclosure, the second syntax element is decoded if at least one of the following satisfies a second decoding condition: a sequence-level syntax element, a picture-level syntax element, a slice-level syntax element, or the size of the current block.

It should be noted that, whether to decode *cu_ibc_model_merge_flag* and *cu_ibc_model_merge_idx* can be determined based on conditions such as a picture-level flag, a slice-level flag, and a block size.

Exemplarily, if a sequence-level flag *sps_ibc_model_merge_enable_flag* exists, the decoding procedure can be as follows:

```
if( !pu_merge_flag)
{
cu_ibc_lic_flag
if( cu_ibc_lic_flag && sps_ibc_model_merge_enable_flag) {
        cu_ibc_model_merge_flag
        if( cu_ibc_model_merge_flag) {
            cu_ibc_model_merge_idx
        }
    }
}
```

In some embodiments of the disclosure, determine to perform prediction on a reference block for the current block based on at least one of: IBC-CIIP, IBC-GPM, or reconstruction reordered IBC (RRIBC), to obtain a reference prediction block for the reference block. The reference block is updated with the reference prediction block.

It should be noted that, the foregoing reference block can also be a prediction block obtained through technology such as IBC-CIIP, IBC-GPM, or RRIBC.

In some embodiments of the disclosure, if the first transform model is an LIC model used in a multi-mode LIC technology, an update parameter for a multi-mode LIC model is recalculated based on a current-block template and a reference-block template. The first transform model is updated based on the update parameter.

It should be noted that, if the selected transform model candidate is a multi-model candidate, a threshold can be recalculated based on a template for the current block and a template for the reference block. Although the threshold exists in the transform model list, the threshold can also be recalculated for transform on the reference block.

In some embodiments of the disclosure, the second syntax element can be decoded in various decoding methods, and embodiments of the disclosure are not limited in this regard.

A first context model is determined from at least one context model according to decoding information of a neighbouring block. The second syntax element is decoded based on the first context model, or the second syntax element is decoded in an equiprobable decoding method.

It should be noted that, *cu_ibc_model_merge_flag* can be coded by jointly applying multiple context models, and the context model(s) is selected based on coding information of neighbouring blocks. Alternatively, *cu_ibc_model_merge_flag* can be coded through equiprobable coding.

In some embodiments of the disclosure, the fourth syntax element is decoded to determine the index information of the transform model in at least one of the following manners. The fourth syntax element is decoded in an equiprobable decoding method to determine the index information of the transform model. The fourth syntax element is decoded by applying a second context model, to determine the index information of the transform model. The fourth syntax element is decoded by selectively applying either the second context model or the equiprobable decoding method, to determine the index information of the transform model.

It should be noted that, bits in *cu_ibc_model_merge_idx* can be coded by applying a context model, or can be coded through equiprobable coding, or can be coded by selectively applying either a context model or equiprobable coding.

In some embodiments of the disclosure, a first context model for decoding the second syntax element when the prediction mode for the current block using the IBC technology is an AMVP mode is the same as or different from a first context model for decoding the second syntax element when the prediction mode for the current block using the IBC technology is a merge mode.

In some embodiments of the disclosure, a second context model for decoding the fourth syntax element when the prediction mode for the current block using the IBC technology is an AMVP mode is the same as or different from a second context model for decoding the fourth syntax element when the prediction mode for the current block using the IBC technology is a merge mode.

It should be noted that, a context model to be applied for coding *cu_ibc_model_merge_flag* and *cu_ibc_model_merge_idx* in the IBC-AMVP mode can be different from or the same as that in the IBC-Merge mode. For example, *cu_ibc_model_merge_flag* or *cu_ibc_model_merge_idx* can be coded by applying the same context model.

In either the IBC-AMVP or the IBC-Merge mode, multiple context models can be applied for coding *cu_ibc_model_merge_flag,* and which context model to select depends on coded information of a neighbouring block. For instance, three context models are available. Context model 1 is to be applied if both *cu_ibc_model_merge_flag* for a left block and *cu_ibc_model_merge_flag* for a top block are set to true. Context model 2 is to be applied if only one of *cu_ibc_model_merge_flag* for the left block or *cu_ibc_model_merge_flag* for the top block is set to true. Otherwise, context model 3 is to be applied. Embodiments of the disclosure are not limited in this regard.

It should be noted that, context models applied in the IBC-AMVP mode or the IBC-Merge mode can be the same or different.

In some embodiments of the disclosure, a flowchart of an optional decoding method is provided. The decoding method can include the following.

S401, a sixth syntax element for a reference block for a current block is obtained, where the sixth syntax element indicates index information of the reference block

S402, the reference block obtained by applying an IBC technology to the current block is determined based on the sixth syntax element.

During decoding, when determining the reference block, the decoder can also decode to obtain the sixth syntax element for the reference block for the current block. The sixth syntax element indicates the index information of the reference block. As such, the decoder can determine from a Merge list, based on the sixth syntax element, the reference block obtained by applying the IBC technology to the current block.

In embodiments of the disclosure, the decoder can determine a reference block for IBC based on an IBC-Merge related element. For example, a Merge list is constructed for the current block, and a certain merge candidate is determined according to a Merge index, thereby obtaining information such as a block vector and block vector precision for the current block. Through motion compensation, the reference block for the current block is obtained.

S403, a second syntax element for a merge candidate block for the current block is obtained.

S404, if the value of the second syntax element for the merge candidate block is a second value, determine that a second syntax element for the current block is the second value.

S405, a first transform model for the current block is determined based on a reference transform model corresponding to the merge candidate block.

The decoder obtains the second syntax element for the merge candidate block inherited from reference information source corresponding to the reference block, that is, the decoded *cu_ibc_model_merge_flag* for the merge candidate block. If *cu_ibc_model_merge_flag* for the merge candidate block for the current block is true, then *cu_ibc_model_merge_flag* for the current block can be directly determined to be true. The first transform model for the current block is determined based on the reference transform model corresponding to the merge candidate block, instead of parsing the second syntax element for the current block from the bitstream, thereby reducing codeword required to be transmitted.

It should be noted that, when constructing a Merge list, a merge candidate is constructed with reference to a PU at a specific position. If *cu_ibc_model_merge_flag* for the candidate PU is true, then *cu_ibc_model_merge_flag* for a current coding block is set to true, while a transform model for the PU is set to a transform model for the current coding block.

Exemplarily, in the IBC-Merge mode, a transform model candidate list is constructed for the current block. The prediction mode and the transform model for the current block are determined based on coding information of a Merge candidate, rather than encode *cu_ibc_model_merge_flag* or *cu_ibc_model_merge_idx,* that is, transmission of *cu_ibc_model_merge_flag* is skipped.

In some embodiments of the disclosure, the first transform model for the current block is determined based on the reference transform model corresponding to the merge candidate block in at least one of the following manners. The reference transform model is taken as the first transform model. A first transform model type of the reference transform model is determined, and the first transform model with the first transform model type is re-derived based on a reference-block template and a current-block template. A flag for a flipped reference block for the merge candidate block is obtained, and if the value of the flag for the flipped reference block is a second value, the first transform model for the current block is determined based on the reference transform model corresponding to the reference block.

It should be noted that, when implicitly inheriting the reference transform model, it is possible to inherit only the type of the reference transform model, and model parameters are re-derived based on templates during actual prediction. Alternatively, when implicitly inheriting *cu_ibc_model_merge_flag* and the reference transform model, whether to inherit *cu_ibc_model_merge_flag* and the reference transform model can be determined based on other block-level coding information such as coding information of a Merge candidate. For example, if a flipped reference block flag for the PU is not zero, then neither *cu_ibc_model_merge_flag* nor the reference transform model is inherited. Otherwise, if the flipped reference block flag for the PU is zero, *cu_ibc_model_merge_flag* and the reference transform model are inherited.

S406, the prediction block for current block is determined based on the reference block and the first transform model.

In embodiments of the disclosure, the decoding procedure in S406 is consistent with that in S206 in the foregoing embodiments, and thus will not be repeated herein.

It should be noted that, whether to apply transform to the reference block for the current block is determined based on *cu_ibc_model_merge_flag* for the Merge candidate. If *cu_ibc_model_merge_flag* is true, an offset value is calculated based on reference samples in a template region of the current block and reference samples in a template region of the reference block by applying the first transform model, to transform the reference block for the current block and then obtain the final prediction block, thereby completing coding of the current block.

In some embodiments of the disclosure, the history transform model list is updated with the first transform model.

In embodiments of the disclosure, the first transform model applied to the current block is stored and added to the history transform model list for constructing a transform model list for a subsequent block.

In some embodiments of the disclosure, the prediction block for the current block is determined based on the reference block if the second syntax element for the current block is the first value or if the second syntax element for the merge candidate block for the current block is the first value. A reconstructed sample value of the current block is determined based on the prediction block for the current block. A fifth transform model for the current block is constructed within a template region or inside the block based on the reconstructed sample value of the current block and a reconstructed sample value of the reference block, for use in a subsequent decoding procedure.

It should be noted that, if the second syntax element for the current block has the first value, it indicates that a transform model list-based prediction mode is not applicable. If the second syntax element for the merge candidate block for the current block has the first value, in an implementation, it indicates that the transform technology is not to be applied for processing of the reference block. In this case, the decoder can determine the prediction block for the current block directly based on the reference block.

For each encoded IBC/IntraTMP block (or encoded IBC/IntraTMP block to which no reference-block transform is applied), a transform model is derived based on the coded reconstructed sample value (within the template region or inside the block), for use in construction of a transform model list and inheritance of the transform model list in subsequent steps of the method described in the disclosure. Even if no transform is applied to the coded IBC block, a corresponding transform model is constructed. As such, the transform model can be inherited by a subsequent block when the coded block serves as the reference block.

Based on the foregoing embodiments, in some embodiments of the disclosure, the decoding method further includes the following. After determining the prediction block for the current block based on the reference block and the first transform model, the following can be performed. A reconstructed sample value of the current block is determined. A seventh transform model for the current block is constructed within a template region or inside the block based on the reconstructed sample value of the current block and a reconstructed sample value of the reference block. The transform model list is updated by replacing the first transform model with the seventh transform model, or the transform model list is updated with a transform model having a minimum error value from the seventh transform model and the first transform model, or the transform model list is updated with the seventh transform model.

It should be noted that, for IBC/IntraTMP to which reference-block transform is applied, a transform model is derived from the template region or inside the block, for use in construction of a transform model list and inheritance of the transform model list in subsequent steps of the method described in the disclosure. Based on the reconstructed value of the current coding block (inside the block or the template region), a new transform model (the type of new transform model can be the same as that of an existing transform model) can be derived to directly replace the first transform model applied during prediction (update the models in the transform model list). Alternatively, whether to replace the existing transform model in the transform model list can be determined based on an error value such as SAD, and a model with smaller error is retained or both models are stored.

It should be noted that, the decoding method provided in the disclosure can be implemented based on inter prediction or IntraTMP prediction, that is, the IBC coding block in the scheme can be replaced with an Inter coding block or an IntraTMP coding block. Embodiments of the disclosure are not limited in this regard.

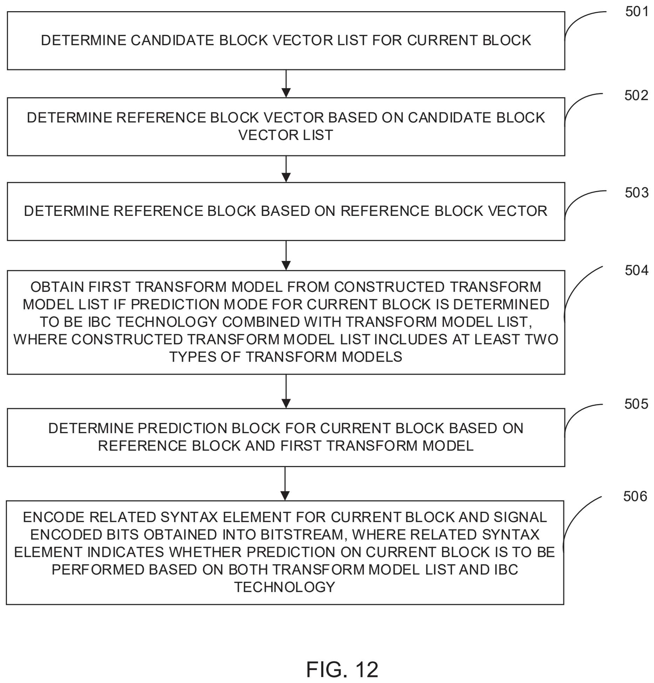

In an embodiment of the disclosure, referring to FIG. 12, FIG. 12 is a schematic flowchart of an encoding method provided in embodiments of the disclosure. As shown in FIG. 12, the method can include the following.

S501, a candidate block vector list for a current block is determined.

S502, a reference block vector is determined based on the candidate block vector list.

S503, a reference block is determined based on the reference block vector.

S504, if a prediction mode for the current block is determined to be an IBC technology combined with a transform model list, a first transform model is obtained from a constructed transform model list, where the constructed transform model list includes at least two types of transform models.

S505, a prediction block for the current block is determined based on the reference block and the first transform model.

S506, a related syntax element for the current block is encoded and encoded bits obtained are signalled into a bitstream, where the related syntax element indicates whether prediction on the current block is to be performed based on both the transform model list and the IBC technology.

The related syntax element at least includes a second syntax element (*cu_ibc_model_merge_flag*), where the second syntax element indicates whether the transform model list is to be applied to the current block for prediction. The related syntax element further includes a first syntax element (*pu_merge_flag*), where the first syntax element indicates a prediction mode for the current block using the IBC technology.

In an embodiment of the disclosure, the prediction mode using the IBC technology includes a merge mode and an AMVP mode. The method further includes the following. If the prediction mode for the current block using the IBC technology is the AMVP mode, a value of the first syntax element is encoded to be a first value, and a third syntax element is encoded, where the third syntax element indicates whether a transform technology is to be applied for prediction, and the third syntax element belongs to the related syntax element. The second syntax element is encoded if a value of the third syntax element is encoded to be a second value; or the second syntax element is encoded if the value of the third syntax element is encoded to be the first value. Alternatively, the second syntax element is encoded if the value of the first syntax element is encoded to be the first value; and the third syntax element is encoded if a value of the second syntax element is encoded to be the first value.

In an embodiment of the disclosure, the method further includes the following. If the prediction mode for the current block using the IBC technology is a merge mode, a value of the first syntax element is encoded to be a second value, and the second syntax element is encoded.

In an embodiment of the disclosure, the method further includes the following. If the transform model list is to be applied to the current block for prediction, the value of the second syntax element is encoded to be the second value, and index information of the first transform model in the transform model list is encoded as a fourth syntax element, where the fourth syntax element indicates a model index of the transform model in the transform model list, and the related syntax element further includes the fourth syntax element.

In an embodiment of the disclosure, the method further includes the following. The transform model list is constructed if the transform model list is to be applied to the current block for prediction.

In an embodiment of the disclosure, the transform model list is constructed as follows. At least one different transform model is sequentially added to an initial transform model list to obtain the transform model list, where the at least one transform model includes at least one of: a second transform model corresponding to a sample in at least one neighbouring position of the current block, a third transform model corresponding to a sample in at least one non-neighbouring position of the current block, a fourth transform model applied in a history encoding procedure, an available transform model in temporal domain, or a preset transform model.

In an embodiment of the disclosure, the preset transform model includes: a model corresponding to a preset model parameter, or a model obtained by applying an offset to at least one of: the second transform model, the third transform model, the fourth transform model, the model corresponding to the preset model parameter, or the available transform model in temporal domain.

In an embodiment of the disclosure, the method further includes the following. For a sample in any neighbouring position of the current block or a sample in any non-neighbouring position of the current block, if the sample satisfies a transform condition, a second transform model corresponding to the neighbouring position of the current block is obtained, or a third transform model corresponding to a sample in any non-neighbouring position of the current block is obtained, where the transform condition includes at least one of: the IBC technology is applied to a block that the sample belongs to; a transform model flag is valid; or a size of the block that the sample belongs to satisfies a first preset size.

In an embodiment of the disclosure, the at least one different transform model includes at least one of: at least one transform model has different transform types; at least one transform model has different model parameters; or a same transform type applies different template regions.

In an embodiment of the disclosure, the at least one different transform model is sequentially added to the initial transform model list to obtain the transform model list as follows. The at least one different transform model is sequentially added to the initial transform model list to obtain an intermediate transform model list. The intermediate transform model list is rearranged to obtain the transform model list.

In an embodiment of the disclosure, the intermediate transform model list is rearranged to obtain the transform model list as follows. Each transform model in the intermediate transform model list is traversed to determine an offset value (offset) corresponding to each transform model. Prediction is performed on a reference-block template by applying each transform model, to determine a reference-block template prediction corresponding to each transform model. An error value between the reference-block template prediction corresponding to each transform model and a current-block template is determined. A template error value corresponding to each transform model is determined based on the error value and the offset value corresponding to each transform model. The transform models are rearranged based on the template error values corresponding to the transform models to obtain the transform model list.

In an embodiment of the disclosure, if the template error values corresponding to the transform models are in an ascending order, index information corresponding to the transform models in the transform model list is also in an ascending order.

In an embodiment of the disclosure, the error value is determined to be a maximum value, if the reference-block template is unavailable.

In an embodiment of the disclosure, first position information (top-left coordinates) of the current block and a current size of the current block are obtained. At least one neighbouring position and at least one non-neighbouring position of the current block are determined based on the first position information and the current size.

In an embodiment of the disclosure, a history transform model applied in an encoding procedure is obtained. If a model same as the history transform model exists in a history transform model list, the same model is removed from the history transform model list, and the history transform model is added to a $1^{st}$ position in the history transform model list. If no model same as the history transform model exists in the history transform model list, the history transform model is added to the $1^{st}$ position in the history transform model list.

In an embodiment of the disclosure, the history transform model is added to the $1^{st}$ position in the history transform model list as follows. If the history transform model list satisfies a first preset list length, a transform model at a last position in the history transform model list is removed and then the history transform model is added to the $1^{st}$ position in the history transform model list.

In an embodiment of the disclosure, the fourth transform model is determined from history transform models sequentially from the $1^{st}$ position to the last position.

In an embodiment of the disclosure, if a size of a block corresponding to a history transform model to-be-added satisfies a second preset size, the history transform model list is updated with the history transform model.

In an embodiment of the disclosure, the prediction block for the current block is determined based on the reference block and the first transform model as follows. Prediction is performed on a reference-block template for the current block by applying the first transform model, to determine prediction values of samples in the reference-block template. A total error value between the prediction values of the samples and samples in a current-block template is determined. A first offset value is obtained by dividing the total error value by the number of the samples. The reference block is transformed by applying the first transform model, and the prediction block for the current block is obtained by compensating a transform result corresponding to each sample with the first offset value; or an updated first transform model is obtained by compensating a parameter in the first transform model with the first offset value, and the reference block is transformed by applying the updated first transform model.

In an embodiment of the disclosure, if a second syntax element corresponding to a merge candidate block for the current block indicates to apply the transform model list for prediction (that is, *cu_ibc_model_merge_flag* for the reference is true), an LIC flag for the current block is determined to be a second value. The prediction block for the current block is determined based on the reference block and the first transform model as follows. Secondary transform is performed on the reference block by applying the first transform model and an LIC transform model indicated by the LIC flag, to determine the prediction block for the current block; or the reference block is transformed by applying an LIC transform model derived from a current-block template and a reference-block template, to determine the prediction block for the current block.

In an embodiment of the disclosure, the second syntax element is encoded as follows. The second syntax element is encoded based on encoded information, where the encoded information includes at least one of: a size of the current block, a CIIP flag for the current block, a GPM flag for the current block, an MBVD flag for the current block, a skip flag for the current block, or a TM_merge flag for the current block.

In an embodiment of the disclosure, the second syntax element is encoded based on the encoded information as follows. The second syntax element is encoded if the encoded information satisfies a first encoding condition, where the first encoding condition includes at least one of: a value of the CIIP flag is a first value (false), a value of the GPM flag is the first value (false), a value of the MBVD flag is the first value (false), a value of the skip flag is the first value (false), a value of the TM_merge flag is the first value (false), the size of the current block is less than a third preset size, or an area of the current block is greater than a first preset area threshold.

In an embodiment of the disclosure, transform models of different transform types correspond to different reference-block template regions; and an error value corresponding to each transform model is an average template error value per sample in a reference-block template corresponding to the transform model.

In an embodiment of the disclosure, a sixth transform model is determined if prediction on the current block is to be performed by applying a transform technology without applying the transform model list. The prediction block for the current block is determined based on the reference block and the sixth transform model. The value of the third syntax element is encoded to be the first value or the second value, and a fifth syntax element is encoded, where the fifth syntax element indicates an index of an LIC model used in a multi-mode LIC technology.

In an embodiment of the disclosure, an LIC flag for the current block is determined to be a first value if a second syntax element corresponding to a merge candidate block for the current block indicates to apply the transform model list for prediction (that is, *cu_ibc_model_merge_flag* for the reference is true).

In an embodiment of the disclosure, the second syntax element is encoded as follows. The second syntax element is encoded if at least one of the following satisfies a second encoding condition: a sequence-level syntax element, a picture-level syntax element, a slice-level syntax element, or a size of the current block.

In an embodiment of the disclosure, if the first transform model is at least one other transform model indicated in the transform model list, a value of a fourth syntax element is encoded to be a third value, where the other transform models are transform modes corresponding to other reference blocks.

In an embodiment of the disclosure, the transform model list is constructed as follows. A derived LIC model is obtained and the LIC model is added to the transform model list.

In an embodiment of the disclosure, determine to perform prediction on a reference block for the current block based on at least one of: IBC-CIIP, IBC-GPM, or RRIBC, to obtain a reference prediction block for the reference block. The reference block is updated with the reference prediction block.

In an embodiment of the disclosure, if the first transform model is an LIC model used in a multi-mode LIC technology, an update parameter for a multi-mode LIC model is recalculated based on a current-block template and a reference-block template. The first transform model is updated based on the update parameter.

In an embodiment of the disclosure, the second syntax element is encoded as follows. A first context model is determined from at least one context model according to encoding information of a neighbouring block. The second syntax element is encoded based on the first context model, or the second syntax element is encoded in an equiprobable encoding method.

In an embodiment of the disclosure, the index information of the first transform model in the transform model list is encoded as the fourth syntax element in at least one of the following manners. The index information of the first transform model in the transform model list is encoded as the fourth syntax element in an equiprobable encoding method. The index information of the first transform model in the transform model list is encoded as the fourth syntax element by applying a second context model. The index information of the first transform model in the transform model list is encoded as the fourth syntax element by selectively applying either the second context model or the equiprobable encoding method.

In an embodiment of the disclosure, a first context model for encoding the second syntax element if the prediction mode for the current block using the IBC technology is an AMVP mode is the same as or different from a first context model for encoding the second syntax element if the prediction mode for the current block using the IBC technology is a merge mode.

In an embodiment of the disclosure, a second context model for encoding the fourth syntax element if the prediction mode for the current block using the IBC technology is an AMVP mode is the same as or different from a second context model for encoding the fourth syntax element if the prediction mode for the current block using the IBC technology is a merge mode.

In an embodiment of the disclosure, index information of a reference block is determined, and the index information of the reference block is encoded as a sixth syntax element, where the sixth syntax element indicates the index information of the reference block.

In an embodiment of the disclosure, after determining the reference block based on the reference block vector, the method further includes the following. A second syntax element for the reference block is obtained. If a value of a second syntax element for a merge candidate block for the current block is a second value, determine that a value of a second syntax element for the current block is the second value. The first transform model for the current block is determined based on a reference transform model corresponding to the merge candidate block.

In an embodiment of the disclosure, the first transform model for the current block is determined based on the reference transform model corresponding to the merge candidate block as follows. The reference transform model is taken as the first transform model.

In an embodiment of the disclosure, the first transform model for the current block is determined based on the reference transform model corresponding to the merge candidate block as follows. A first transform model type of the reference transform model is determined. The first transform model with the first transform model type is re-derived based on a reference-block template and a current-block template.

In an embodiment of the disclosure, the first transform model for the current block is determined based on the reference transform model corresponding to the merge candidate block as follows. A flag for a flipped reference block for the merge candidate block is obtained. If a value of the flag for the flipped reference block is the second value, the first transform model for the current block is determined based on the reference transform model corresponding to the merge candidate block.

In an embodiment of the disclosure, the method further includes the following. The prediction block for the current block is determined based on the reference block if the second syntax element for the current block is the first value or if the second syntax element for the merge candidate block for the current block is the first value. A reconstructed sample value of the current block is determined based on the prediction block for the current block. A fifth transform model for the current block is constructed within a template region or inside the block based on the reconstructed sample value of the current block and a reconstructed sample value of the reference block, for use in a subsequent encoding procedure.

In an embodiment of the disclosure, after determining the prediction block for the current block based on the reference block and the first transform model, the method further includes the following. A reconstructed sample value of the current block is determined. A seventh transform model for the current block is constructed within a template region or inside the block based on the reconstructed sample value of the current block and a reconstructed sample value of the reference block. The transform model list is updated by replacing the first transform model with the seventh transform model; or the transform model list is updated with a transform model having a minimum error value from the seventh transform model and the first transform model; or the transform model list is updated with the seventh transform model.

In an embodiment of the disclosure, the method further includes the following. If the first transform model is an LIC model, a sample value of a first reconstructed region neighbouring a current coding block and a sample value of a second reconstructed region neighbouring the reference block are obtained. A first parameter ($\alpha$) of the LIC model is derived based on the sample value of the first reconstructed region and the sample value of the second reconstructed region, and a second parameter ($\beta$) is determined according to the first parameter. A third transform model is determined based on the original first parameter and the second parameter of the LIC model. The reference block is transformed by applying the third transform model, to obtain the prediction block for the current block (implies *offset* = 0).

In an embodiment of the disclosure, a prediction type for blocks corresponding to the second transform model, the third transform model, and the fourth transform model in the transform model list is either intra TMP or an IBC technology.

In an embodiment of the disclosure, the history transform model list is updated with the first transform model.

In an embodiment of the disclosure, if the prediction mode for the current block is determined to be a non-IBC technology, a value of the first syntax element is encoded to be a first value.

It is understandable that, an encoder can select the first transform model from the transform model list including at least two types of transform models, and apply the selected first transform model to transform the reference block, thereby determining the prediction block. Therefore, during encoding, the first transform model used for transform can be selected and determined from the transform model list, which ensures diversity in selection. As such, it is possible to increase options for prediction, improve prediction diversity, and thus improve encoding performance.

Embodiments of the disclosure provide a bitstream. The bitstream is generated by performing bit encoding on information to-be-encoded. The information to-be-encoded includes at least one of: a first syntax element, a second syntax element, a third syntax element, a fourth syntax element, a fifth syntax element, a sixth syntax element, a size of a current block, a CIIP flag for the current block, a GPM flag for the current block, an MBVD flag for the current block, a skip flag for the current block, a TM_merge flag for the current block, or a context model. The first syntax element indicates a prediction mode for the current block using an IBC technology. The second syntax element indicates whether a transform model list is to be applied to the current block for prediction. The third syntax element indicates whether a transform technology is to be applied for prediction. The fourth syntax element indicates a model index of a transform model in the transform model list. The fifth syntax element indicates an index of an LIC model used in a multi-mode LIC technology. The sixth syntax element indicates index information of a reference block.

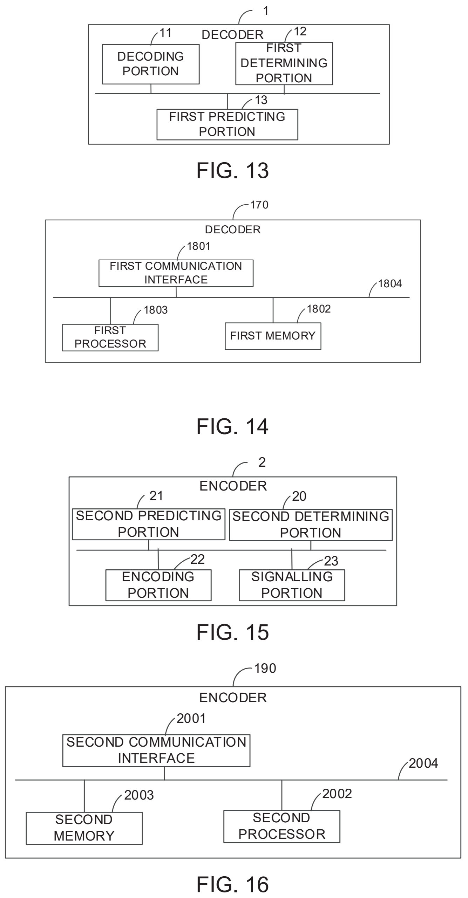

As illustrated in FIG. 13, embodiments of the disclosure provide a decoder 1. The decoder includes a decoding portion 11, a first determining portion 12, and a first predicting portion 13. The decoding portion 11 is configured to obtain a related syntax element for a current block, where the related syntax element indicates whether prediction on the current block is to be performed based on both a transform model list and an IBC technology. The first determining portion 12 is configured to determine a reference block obtained by applying the IBC technology to the current block, and determine, according to the related syntax element, a first transform model obtained based on a constructed transform model list, where the constructed transform model list includes at least two types of transform models. The first predicting portion 13 is configured to determine a prediction block for the current block based on the reference block and the first transform model.

In some embodiments of the disclosure, the related syntax element at least includes a second syntax element, where the second syntax element indicates whether the transform model list is to be applied to the current block for prediction.The related syntax element further includes a first syntax element, where the first syntax element indicates a prediction mode for the current block using the IBC technology.

In some embodiments of the disclosure, the decoding portion 11 is further configured to: decode the first syntax element; and determine, according to the first syntax element, the prediction mode for the current block using the IBC technology, and decode the second syntax element.

In some embodiments of the disclosure, the first determining portion 12 is further configured to determine that the prediction mode for the current block using the IBC technology is an AMVP mode, if a value of the first syntax element is a first value. The decoding portion 11 is further configured to: decode a third syntax element, where the third syntax element indicates whether a transform technology is to be applied for prediction, and the third syntax element belongs to the related syntax element; and decode the second syntax element if a value of the third syntax element is a second value or decode the second syntax element if the value of the third syntax element is the first value. Alternatively, the first determining portion 12 is further configured to determine that the prediction mode for the current block using the IBC technology is an AMVP mode, if the value of the first syntax element is the first value. The decoding portion 11 is further configured to decode the second syntax element; and decode the third syntax element if a value of the second syntax element is the first value.

In some embodiments of the disclosure, the first determining portion 12 is further configured to determine that the prediction mode for the current block using the IBC technology is a merge mode, if a value of the first syntax element is a second value.The decoding portion 11 is further configured to decode the second syntax element.

In some embodiments of the disclosure, the decoding portion 11 is further configured to: if the value of the second syntax element is a second value indicating to apply the transform model list to the current block for prediction, decode a fourth syntax element to determine index information of the transform model, and skip inheriting an LIC flag from a merge candidate block for the current block, where the fourth syntax element indicates a model index of the transform model in the transform model list, and the related syntax element further includes the fourth syntax element. The first determining portion 12 is further configured to determine the first transform model from the constructed transform model list based on the index information of the transform model.

In some embodiments of the disclosure, the first determining portion 12 is further configured to construct the transform model list if the value of the second syntax element is the second value.

In some embodiments of the disclosure, the first determining portion 12 is further configured to add sequentially at least one different transform model to an initial transform model list to obtain the transform model list, where the at least one transform model includes at least one of: a second transform model corresponding to a sample in at least one neighbouring position of the current block, a third transform model corresponding to a sample in at least one non-neighbouring position of the current block, a fourth transform model applied in a history decoding procedure, an available transform model in temporal domain, or a preset transform model.

In some embodiments of the disclosure, the preset transform model includes: a model corresponding to a preset model parameter, or a model obtained by applying an offset to at least one of: the second transform model, the third transform model, the fourth transform model, the model corresponding to the preset model parameter, or the available transform model in temporal domain.

In some embodiments of the disclosure, the first determining portion 1, is further configured to: for a sample in any neighbouring position of the current block or a sample in any non-neighbouring position of the current block, if the sample satisfies a transform condition, obtaining a second transform model corresponding to the neighbouring position of the current block, or obtaining a third transform model corresponding to a sample in any non-neighbouring position of the current block, where the transform condition includes at least one of: the IBC technology is applied to a block that the sample belongs to; a transform model flag is valid; or a size of the block that the sample belongs to satisfies a first preset size.

In some embodiments of the disclosure, the at least one different transform model includes at least one of: at least one transform model has different transform types; at least one transform model has different model parameters; or a same transform type applies different template regions.

In some embodiments of the disclosure, the first determining portion 12 is further configured to: add sequentially the at least one different transform model to the initial transform model list to obtain an intermediate transform model list; and rearrange the intermediate transform model list to obtain the transform model list.

In some embodiments of the disclosure, the first determining portion 12 is further configured to: traverse each transform model in the intermediate transform model list to determine an offset value corresponding to each transform model; perform prediction on a reference-block template by applying each transform model, to determine a reference-block template prediction corresponding to each transform model; determine an error value between the reference-block template prediction corresponding to each transform model and a current-block template; determine a template error value corresponding to each transform model based on the error value and the offset value corresponding to each transform model; and rearrange the transform models based on the template error values corresponding to the transform models to obtain the transform model list.

In some embodiments of the disclosure, if the template error values corresponding to the transform models are in an ascending order, index information corresponding to the transform models in the transform model list is also in an ascending order.

In some embodiments of the disclosure, the error value is determined to be a maximum value, if the reference-block template is unavailable.

In some embodiments of the disclosure, the first determining portion 12, is further configured to obtain first position information of the current block and a current size of the current block; and determine at least one neighbouring position and at least one non-neighbouring position of the current block based on the first position information and the current size.

In some embodiments of the disclosure, the first determining portion 12 is further configured to: obtain a history transform model applied in a decoding procedure; and if a model same as the history transform model exists in a history transform model list, remove the same model from the history transform model list, and add the history transform model to a 1st position in the history transform model list; if no model same as the history transform model exists in the history transform model list, add the history transform model to the 1st position in the history transform model list.

In some embodiments of the disclosure, the first determining portion 12 is further configured to: if the history transform model list satisfies a first preset list length, remove a transform model at a last position in the history transform model list and then add the history transform model to the 1st position in the history transform model list.

In some embodiments of the disclosure, the fourth transform model is determined from history transform models sequentially from the 1st position to the last position.

In some embodiments of the disclosure, if a size of a block corresponding to a history transform model to-be-added satisfies a second preset size, the history transform model list is updated with the history transform model.

In some embodiments of the disclosure, the first predicting portion 13 is further configured to: perform prediction on a reference-block template for the current block by applying the first transform model, to determine prediction values of samples in the reference-block template; determine a total error value between the prediction values of the samples and samples in a current-block template; obtain a first offset value by dividing the total error value by the number of the samples; and transform the reference block by applying the first transform model, and obtain the prediction block for the current block by compensating a transform result corresponding to each sample with the first offset value; or obtain an updated first transform model by compensating a parameter in the first transform model with the first offset value, and transform the reference block by applying the updated first transform model.

In some embodiments of the disclosure, the first determining portion 12 is further configured to determine an LIC flag for the current block to be a second value, if a second syntax element corresponding to a merge candidate block for the current block indicates to apply the transform model list for prediction. The first predicting portion 13 is further configured to perform secondary transform on the reference block by applying the first transform model and an LIC transform model indicated by the LIC flag, to determine the prediction block for the current block.

In some embodiments of the disclosure, the decoding portion 11 is further configured to decode the second syntax element based on decoded information, where the decoded information includes at least one of: a size of the current block, a CIIP flag for the current block, a GPM flag for the current block, an MBVD flag for the current block, a skip flag for the current block, or a TM_merge flag for the current block.

In some embodiments of the disclosure, the decoding portion 11 is further configured to decode the second syntax element if the decoded information satisfies a first decoding condition, where the first decoding condition includes at least one of: a value of the CIIP flag is a first value; a value of the GPM flag is the first value; a value of the MBVD flag is the first value; a value of the skip flag is the first value; a value of the TM_merge flag is the first value; the size of the current block is less than a third preset size; or an area of the current block is greater than a first preset area threshold.

In some embodiments of the disclosure, transform models of different transform types correspond to different reference-block template regions; and an error value corresponding to each transform model is an average template error value per sample in a reference-block template corresponding to the transform model.

In some embodiments of the disclosure, the decoding portion 11 is further configured to: after decoding the second syntax element if the value of the third syntax element is the first value, decode a fifth syntax element if the value of the third syntax element is the second value, where the fifth syntax element indicates an index of an LIC model used in a multi-mode LIC technology. The first determining portion 12 is further configured to determine a sixth transform model based on the fifth syntax element. The first predicting portion 13 is further configured to determine the prediction block for the current block based on the reference block and the sixth transform model.

In some embodiments of the disclosure, the first determining portion 12 is further configured to determine an LIC flag for the current block to be a first value if a second syntax element corresponding to a merge candidate block for the current block indicates to apply the transform model list for prediction.

In some embodiments of the disclosure, the decoding portion 11 is further configured to decode the second syntax element if at least one of the following satisfies a second decoding condition: a sequence-level syntax element, a picture-level syntax element, a slice-level syntax element, or a size of the current block.

In some embodiments of the disclosure, the decoding portion 11 is further configured to decode a fifth syntax element if the value of the third syntax element is the first value, where the fifth syntax element indicates an index of an LIC model used in a multi-mode LIC technology. The first determining portion 12 is further configured to determine a sixth transform model based on the fifth syntax element. The first predicting portion 13 is further configured to determine the prediction block for the current block based on the reference block and the sixth transform model.

In some embodiments of the disclosure, the first determining portion 12 is further configured to indicate at least one other transform model in the transform model list if a fourth syntax element for the transform model is a third value, where the other transform models are transform modes corresponding to other reference blocks.

In some embodiments of the disclosure, the first determining portion 12 is further configured to obtain a derived LIC model and adding the LIC model to the transform model list.

In some embodiments of the disclosure, the first determining portion 12 is further configured to: determine to perform prediction on a reference block for the current block based on at least one of: IBC-CIIP, IBC-GPM, or RRIBC) to obtain a reference prediction block for the reference block; and update the reference block with the reference prediction block.

In some embodiments of the disclosure, the first determining portion 12 is further configured to: recalculate an update parameter for a multi-mode LIC model based on a current-block template and a reference-block template if the first transform model is an LIC model used in a multi-mode LIC technology; and update the first transform model based on the update parameter.

In some embodiments of the disclosure, the decoding portion 11 is further configured to: determine a first context model from at least one context model according to decoding information of a neighbouring block; and decode the second syntax element based on the first context model, or decode the second syntax element in an equiprobable decoding method.

In some embodiments of the disclosure, the decoding portion 11 is further configured to perform at least one of: decode the fourth syntax element in an equiprobable decoding method to determine the index information of the transform model; decode the fourth syntax element by applying a second context model, to determine the index information of the transform model; or decode the fourth syntax element by selectively applying either the second context model or the equiprobable decoding method, to determine the index information of the transform model.

In some embodiments of the disclosure, a first context model for decoding the second syntax element if the prediction mode for the current block using the IBC technology is an AMVP mode is the same as or different from a first context model for decoding the second syntax element if the prediction mode for the current block using the IBC technology is a merge mode.

In some embodiments of the disclosure, a second context model for decoding the fourth syntax element if the prediction mode for the current block using the IBC technology is an AMVP mode is the same as or different from a second context model for decoding the fourth syntax element if the prediction mode for the current block using the IBC technology is a merge mode.

In some embodiments of the disclosure, the decoding portion 11 is further configured to obtain a sixth syntax element for a reference block for the current block, where the sixth syntax element indicates index information of the reference block. The first determining portion 12 is further configured to determine, based on the sixth syntax element, the reference block obtained by applying the IBC technology to the current block.

In some embodiments of the disclosure, the first determining portion 12 is further configured to: obtain a second syntax element for a merge candidate block for the current block; determine that a second syntax element for the current block is the second value, if a value of the second syntax element for the merge candidate block is a second value; and determine the first transform model for the current block based on a reference transform model corresponding to the merge candidate block.

In some embodiments of the disclosure, the first determining portion 12 is further configured to take the reference transform model as the first transform model.

In some embodiments of the disclosure, the first determining portion 12 is further configured to: determine a first transform model type of the reference transform model; and re-derive the first transform model with the first transform model type based on a reference-block template and a current-block template.

In some embodiments of the disclosure, the first determining portion 12 is further configured to: obtain a flag for a flipped reference block for the merge candidate block; and if a value of the flag for the flipped reference block is the second value, determine the first transform model for the current block based on the reference transform model corresponding to the merge candidate block.

In some embodiments of the disclosure, the first determining portion 12 is further configured to: determine the prediction block for the current block based on the reference block if the second syntax element for the current block is the first value or if the second syntax element for the merge candidate block for the current block is the first value; determine a reconstructed sample value of the current block based on the prediction block for the current block; and construct a fifth transform model for the current block within a template region or inside the block based on the reconstructed sample value of the current block and a reconstructed sample value of the reference block, for use in a subsequent decoding procedure.

In some embodiments of the disclosure, the first determining portion 12 is further configured to: determine a reconstructed sample value of the current block; construct a seventh transform model for the current block within a template region or inside the block based on the reconstructed sample value of the current block and a reconstructed sample value of the reference block; and update the transform model list by replacing the first transform model with the seventh transform model, or update the transform model list with a transform model having a minimum error value from the seventh transform model and the first transform model, or update the transform model list with the seventh transform model.

In some embodiments of the disclosure, the first determining portion 12 is further configured to: if the first transform model is an LIC model, obtaining a sample value of a first reconstructed region neighbouring a current coding block and a sample value of a second reconstructed region neighbouring the reference block; deriving a first parameter of the LIC model based on the sample value of the first reconstructed region and the sample value of the second reconstructed region, and determining a second parameter according to the first parameter; and determining a third transform model based on the original first parameter and the second parameter of the LIC model. The first predicting portion 13 is further configured to transform the reference block by applying the third transform model, to obtain the prediction block for the current block.

In some embodiments of the disclosure, a prediction type for blocks corresponding to the second transform model, the third transform model, and the fourth transform model in the transform model list is either intra TMP or an IBC technology.

In some embodiments of the disclosure, the history transform model list is updated with the first transform model.

It is understandable that, various functional units in the decoder are further configured to perform the decoding method according to any of the foregoing embodiments.

It can be understood that, in embodiments of the disclosure, the term "unit" can be a portion of circuit, a portion of a processor, a portion of a program or software, or can be modular or non-modular. In addition, various components described in various embodiments of the disclosure may be integrated into one processing unit or may be present as a number of physically separated units, and two or more units may be integrated into one. The integrated unit may take the form of hardware or a software functional unit.

If the integrated unit is implemented as software functional modules and not sold or used as standalone products, it may be stored in a computer-readable storage medium. Based on such an understanding, the essential technical solutions of embodiments, or the portion that contributes to the related art, or all or part of the technical solutions may be embodied as software products. The computer software products can be stored in a storage medium and may include multiple instructions that, when executed, can cause a computer device, e.g., a personal computer, a server, a network device, a processor, etc., to execute some or all operations of the methods described in various embodiments of the disclosure. The above storage medium may include various kinds of media that can store program codes, such as a universal serial bus (USB) flash disk, a mobile hard drive, a read-only memory (ROM), a random access memory (RAM), a mobile hard drive, a magnetic disk, an optical disk, etc.

Therefore, embodiments of the disclosure provide a computer-readable storage medium. The computer-readable storage medium is applied to a decoder 170. The computer-readable storage medium stores computer programs which, when executed by a first processor, implement the decoding method according to any of the foregoing embodiments.

Based on the composition of the decoder 170 and the computer-readable storage medium, referring to FIG. 14, FIG. 14 is a schematic diagram illustrating the hardware structure of the decoder 170 provided in embodiments of the disclosure. As illustrated in FIG. 14, the decoder 170 may include: a first communication interface 1801, a first memory 1802, and a first processor 1803. These components are coupled together via a first bus system 1804. It can be understood that, the first bus system 1804 is configured for connection and communication between these components. In addition to a data bus, the first bus system 1804 further includes a power bus, a control bus, and a status signal bus. However, for clarity of illustration, all buses are labeled as the first bus system 1804 in FIG. 14. The first communication interface 1801 is configured for signal reception and transmission during information reception and transmission with other external network elements. The first memory 1802 is configured to store computer programs executable by the first processor 1803. The first processor 1803 is configured to execute the decoding method when running the computer programs.

It can be understood that, the first memory 1802 in embodiments of the disclosure may be a volatile memory or a non-volatile memory, or may include both the volatile memory and the non-volatile memory. The non-volatile memory may be a ROM, a PROM, an erasable PROM (EPROM), an electrically EPROM (EEPROM), or flash memory. The volatile memory can be a RAM that acts as an external cache. By way of example but not limitation, many forms of RAM are available, such as a static RAM (SRAM), a dynamic RAM (DRAM), a synchronous DRAM (SDRAM), a double data rate SDRAM (DDR SDRAM), an enhanced SDRAM (ESDRAM), a synchlink DRAM (SLDRAM), and a direct rambus RAM (DR RAM). It should be noted that, the first memory 1802 of the systems and methods described in the disclosure is intended to include, but is not limited to, these and any other suitable types of memory.

The first processor 1803 in embodiments of the disclosure may be an integrated circuit chip with signal processing capabilities. During implementation, each step of the foregoing method embodiments may be completed by an integrated logic circuit of hardware in the first processor 1803 or an instruction in the form of software. The processor may be a general-purpose processor, a digital signal processor (DSP), an application specific integrated circuit (ASIC), a field programmable gate array (FPGA), or other programmable logic devices, discrete gates or transistor logic devices, discrete hardware components. The methods, steps, and logic blocks disclosed in embodiments of the disclosure can be implemented or executed. The general-purpose processor may be a microprocessor, or the processor may be any conventional processor or the like. The steps of the method disclosed in embodiments of the disclosure may be directly implemented by a hardware decoding processor, or may be performed by hardware and software modules in the decoding processor. The software module can be located in a storage medium such as a RAM, a flash memory, a ROM, a PROM, or an electrically erasable programmable memory, registers, and the like. The storage medium is located in the first memory 1802. The first processor 1803 reads the information in the first memory 1802, and completes the steps of the method described above with the hardware thereof.

It is understandable that the embodiments described in the disclosure may be implemented in hardware, software, firmware, middleware, microcode, or any combination thereof. For a hardware implementation, the processing unit may be implemented within one or more ASICs, DSPs, DSP devices (DSPDs), PLDs, FPGAs, general-purpose processors, controllers, microcontrollers, microprocessors, other electronic units designed to perform the functions described in the disclosure, or a combination thereof. For a software implementation, the techniques described in the disclosure may be realized through modules (e.g., procedures, functions, etc.) for performing the functions described in the disclosure. Software codes may be stored in a memory and executed by a processor. The memory may be implemented within the processor or externally to the processor.

Optionally, as another embodiment, the first processor 1803 is further configured to perform the decoding method according to any of the foregoing embodiments when running the computer programs.

Embodiments provide a decoder. For the decoder, the decoder can select the first transform model from the transform model list including at least two types of transform models, and apply the selected first transform model to transform the reference block, thereby determining the prediction block. Therefore, during encoding, the first transform model used for transform can be selected and determined from the transform model list, which ensures diversity in selection. As such, it is possible to increase options for prediction, improve prediction diversity, and thus improve decoding performance.

In another embodiment of the disclosure, based on the same concept as the foregoing embodiments, referring to FIG. 15, FIG. 15 is a schematic structural diagram of an encoder 2 provided in embodiments of the disclosure. As illustrated in FIG. 15, the encoder 2 includes a second determining portion 20, a second predicting portion 21, and a encoding portion 22. The second determining portion 20 is configured to: determine a candidate block vector list for a current block; determine a reference block vector based on the candidate block vector list; determine a reference block based on the reference block vector; and if a prediction mode for the current block is determined to be an IBC technology combined with a transform model list, obtain a first transform model from a constructed transform model list, where the constructed transform model list includes at least two types of transform models. The second predicting portion 21 is configured to determine a prediction block for the current block based on the reference block and the first transform model. The encoding portion 22 is configured to encode a related syntax element for the current block and signal, via a signalling portion 23, encoded bits obtained into a bitstream, where the related syntax element indicates whether prediction on the current block is to be performed based on both the transform model list and the IBC technology.

In some embodiments of the disclosure, the related syntax element at least includes a second syntax element, where the second syntax element indicates whether the transform model list is to be applied to the current block for prediction. The related syntax element further includes a first syntax element, where the first syntax element indicates a prediction mode for the current block using the IBC technology.

In some embodiments of the disclosure, the prediction mode using the IBC technology includes a merge mode and an AMVP mode. The encoding portion 22 is further configured to: if the prediction mode for the current block using the IBC technology is the AMVP mode, encode a value of the first syntax element to be a first value, and encode a third syntax element, where the third syntax element indicates whether a transform technology is to be applied for prediction, and the third syntax element belongs to the related syntax element. The encoding portion 22 is further configured to: encode the second syntax element if a value of the third syntax element is encoded to be a second value; or encode the second syntax element if the value of the third syntax element is encoded to be the first value. Alternatively, the encoding portion 22 is further configured to: encode the second syntax element if the value of the first syntax element is encoded to be the first value; and encode the third syntax element if a value of the second syntax element is encoded to be the first value.

In some embodiments of the disclosure, the encoding portion 22 is further configured to: if the prediction mode for the current block using the IBC technology is a merge mode, encode a value of the first syntax element to be a second value, and encode the second syntax element.

In some embodiments of the disclosure, the encoding portion 22 is further configured to: if the transform model list is to be applied to the current block for prediction, encoding the value of the second syntax element to be the second value, and encoding index information of the first transform model in the transform model list as a fourth syntax element, where the fourth syntax element indicates a model index of the transform model in the transform model list, and the related syntax element further includes the fourth syntax element.

In some embodiments of the disclosure, the second determining portion 20 is further configured to construct the transform model list if the transform model list is to be applied to the current block for prediction.

In some embodiments of the disclosure, the second determining portion 20 is further configured to adding sequentially at least one different transform model to an initial transform model list to obtain the transform model list, where the at least one transform model includes at least one of: a second transform model corresponding to a sample in at least one neighbouring position of the current block, a third transform model corresponding to a sample in at least one non-neighbouring position of the current block, a fourth transform model applied in a history encoding procedure, an available transform model in temporal domain, or a preset transform model.

In some embodiments of the disclosure, the preset transform model includes: a model corresponding to a preset model parameter, or a model obtained by applying an offset to at least one of: the second transform model, the third transform model, the fourth transform model, the model corresponding to the preset model parameter, or the available transform model in temporal domain.

In some embodiments of the disclosure, the second determining portion 20 is further configured to: for a sample in any neighbouring position of the current block or a sample in any non-neighbouring position of the current block, if the sample satisfies a transform condition, obtain a second transform model corresponding to the neighbouring position of the current block, or obtain a third transform model corresponding to a sample in any non-neighbouring position of the current block, where the transform condition includes at least one of: the IBC technology is applied to a block that the sample belongs to; a transform model flag is valid; or a size of the block that the sample belongs to satisfies a first preset size.

In some embodiments of the disclosure, the at least one different transform model includes at least one of: at least one transform model has different transform types; at least one transform model has different model parameters; or a same transform type applies different template regions.

In some embodiments of the disclosure, the second determining portion 20 is further configured to: add sequentially the at least one different transform model to the initial transform model list to obtain an intermediate transform model list; and rearrange the intermediate transform model list to obtain the transform model list.

In some embodiments of the disclosure, the second determining portion 20 is further configured to: traverse each transform model in the intermediate transform model list to determine an offset value corresponding to each transform model; perform prediction on a reference-block template by applying each transform model, to determine a reference-block template prediction corresponding to each transform model; determine an error value between the reference-block template prediction corresponding to each transform model and a current-block template; determine a template error value corresponding to each transform model based on the error value and the offset value corresponding to each transform model; and rearrange the transform models based on the template error values corresponding to the transform models to obtain the transform model list.

In some embodiments of the disclosure, if the template error values corresponding to the transform models are in an ascending order, index information corresponding to the transform models in the transform model list is also in an ascending order.

In some embodiments of the disclosure, if the reference-block template is unavailable, the error value is determined to be a maximum value.

In some embodiments of the disclosure, the second determining portion 20 is further configured to: obtain first position information of the current block and a current size of the current block; and determine at least one neighbouring position and at least one non-neighbouring position of the current block based on the first position information and the current size.

In some embodiments of the disclosure, the second determining portion 20 is further configured to: obtain a history transform model applied in an encoding procedure; and if a model same as the history transform model exists in a history transform model list, remove the same model from the history transform model list, and adding the history transform model to a 1st position in the history transform model list; if no model same as the history transform model exists in the history transform model list, add the history transform model to the 1st position in the history transform model list.

In some embodiments of the disclosure, the second determining portion 20 is further configured to: if the history transform model list satisfies a first preset list length, remove a transform model at a last position in the history transform model list and then add the history transform model to the 1st position in the history transform model list.

In some embodiments of the disclosure, the fourth transform model is determined from history transform models sequentially from the 1st position to the last position.

In some embodiments of the disclosure, the second determining portion 20 is further configured to: if a size of a block corresponding to a history transform model to-be-added satisfies a second preset size, update the history transform model list with the history transform model.

In some embodiments of the disclosure, the second predicting portion 21 is further configured to: perform prediction on a reference-block template for the current block by applying the first transform model, to determine prediction values of samples in the reference-block template; determine a total error value between the prediction values of the samples and samples in a current-block template; obtain a first offset value by dividing the total error value by the number of the samples; and transform the reference block by applying the first transform model, and obtain the prediction block for the current block by compensating a transform result corresponding to each sample with the first offset value; or obtain an updated first transform model by compensating a parameter in the first transform model with the first offset value, and transform the reference block by applying the updated first transform model.

In some embodiments of the disclosure, the second determining portion 20 is further configured to: if a second syntax element corresponding to a merge candidate block for the current block indicates to apply the transform model list for prediction, determining an LIC flag for the current block to be a second value. The second predicting portion 21 is further configured to: perform secondary transform on the reference block by applying the first transform model and an LIC transform model indicated by the LIC flag, to determine the prediction block for the current block.

In some embodiments of the disclosure, the encoding portion 22 is further configured to encode the second syntax element based on encoded information, where the encoded information includes at least one of: a size of the current block, a CIIP flag for the current block, a GPM flag for the current block, an MBVD flag for the current block, a skip flag for the current block, or a TM_merge flag for the current block.

In some embodiments of the disclosure, the second syntax element is encoded based on the encoded information as follows. The second syntax element is encoded if the encoded information satisfies a first encoding condition, where the first encoding condition includes at least one of: a value of the CIIP flag is a first value; a value of the GPM flag is the first value; a value of the MBVD flag is the first value; a value of the skip flag is the first value; a value of the TM_merge flag is the first value; the size of the current block is less than a third preset size; or an area of the current block is greater than a first preset area threshold.

In some embodiments of the disclosure, transform models of different transform types correspond to different reference-block template regions; and an error value corresponding to each transform model is an average template error value per sample in a reference-block template corresponding to the transform model.

In some embodiments of the disclosure, the encoding portion 22 is further configured to determine a sixth transform model if prediction on the current block is to be performed by applying a transform technology without applying the transform model list. The second predicting portion 21 is further configured to determine the prediction block for the current block based on the reference block and the sixth transform model. The encoding portion 22 is further configured to encode the value of the third syntax element to be the first value or the second value, and encoding a fifth syntax element, where the fifth syntax element indicates an index of an LIC model used in a multi-mode LIC technology.

In some embodiments of the disclosure, an LIC flag for the current block is determined to be a first value if a second syntax element corresponding to a merge candidate block for the current block indicates to apply the transform model list for prediction.

In some embodiments of the disclosure, the encoding portion 22 is further configured to encode the second syntax element if at least one of the following satisfies a second encoding condition: a sequence-level syntax element, a picture-level syntax element, a slice-level syntax element, or a size of the current block.

In some embodiments of the disclosure, if the first transform model is at least one other transform model indicated in the transform model list, a value of a fourth syntax element is encoded to be a third value, where the other transform models are transform modes corresponding to other reference blocks.

In some embodiments of the disclosure, the second determining portion 20 is further configured to obtain a derived LIC model and add the LIC model to the transform model list.

In some embodiments of the disclosure, the second determining portion 20 is further configured to: determine to perform prediction on a reference block for the current block based on at least one of: IBC-CIIP, IBC-GPM, or RRIBC, to obtain a reference prediction block for the reference block; and update the reference block with the reference prediction block.

In some embodiments of the disclosure, the second determining portion 20, is further configured to: if the first transform model is an LIC model used in a multi-mode LIC technology, recalculate an update parameter for a multi-mode LIC model based on a current-block template and a reference-block template; and update the first transform model based on the update parameter.

In some embodiments of the disclosure, the encoding portion 22 is further configured to: determine a first context model from at least one context model according to encoding information of a neighbouring block; and encode the second syntax element based on the first context model, or encode the second syntax element in an equiprobable encoding method.

In some embodiments of the disclosure, the encoding portion 22, is further configured to perform at least one of: encoding the index information of the first transform model in the transform model list as the fourth syntax element in an equiprobable encoding method; encoding the index information of the first transform model in the transform model list as the fourth syntax element by applying a second context model; or encoding the index information of the first transform model in the transform model list as the fourth syntax element by selectively applying either the second context model or the equiprobable encoding method.

In some embodiments of the disclosure, a first context model for encoding the second syntax element if the prediction mode for the current block using the IBC technology is an AMVP mode is the same as or different from a first context model for encoding the second syntax element if the prediction mode for the current block using the IBC technology is a merge mode.

In some embodiments of the disclosure, a second context model for encoding the fourth syntax element if the prediction mode for the current block using the IBC technology is an AMVP mode is the same as or different from a second context model for encoding the fourth syntax element if the prediction mode for the current block using the IBC technology is a merge mode.

In some embodiments of the disclosure, index information of a reference block is determined, and the index information of the reference block is encoded as a sixth syntax element, where the sixth syntax element indicates the index information of the reference block.

In some embodiments of the disclosure, the second determining portion 20 is further configured to: obtain a second syntax element for the reference block; if a value of a second syntax element for a merge candidate block for the current block is a second value, determine that a value of a second syntax element for the current block is the second value; and determine the first transform model for the current block based on a reference transform model corresponding to the merge candidate block.

In some embodiments of the disclosure, the second determining portion 20 is further configured to take the reference transform model as the first transform model.

In some embodiments of the disclosure, the second determining portion 20 is further configured to: determine a first transform model type of the reference transform model; and re-derive the first transform model with the first transform model type based on a reference-block template and a current-block template.

In some embodiments of the disclosure, the second determining portion 20 is further configured to: obtain a flag for a flipped reference block for the merge candidate block; and if a value of the flag for the flipped reference block is the second value, determine the first transform model for the current block based on the reference transform model corresponding to the merge candidate block.

In some embodiments of the disclosure, the second determining portion 20 is further configured to: determine the prediction block for the current block based on the reference block if the second syntax element for the current block is the first value or if the second syntax element for the merge candidate block for the current block is the first value; determine a reconstructed sample value of the current block based on the prediction block for the current block; and construct a fifth transform model for the current block within a template region or inside the block based on the reconstructed sample value of the current block and a reconstructed sample value of the reference block, for use in a subsequent encoding procedure.

In some embodiments of the disclosure, the second determining portion 20 is further configured to: determine a reconstructed sample value of the current block; construct a seventh transform model for the current block within a template region or inside the block based on the reconstructed sample value of the current block and a reconstructed sample value of the reference block; and update the transform model list by replacing the first transform model with the seventh transform model, or update the transform model list with a transform model having a minimum error value from the seventh transform model and the first transform model, or update the transform model list with the seventh transform model.

In some embodiments of the disclosure, the second determining portion 20 is further configured to: if the first transform model is an LIC model, obtain a sample value of a first reconstructed region neighbouring a current coding block and a sample value of a second reconstructed region neighbouring the reference block; derive a first parameter of the LIC model based on the sample value of the first reconstructed region and the sample value of the second reconstructed region, and determine a second parameter according to the first parameter; determine a third transform model based on the original first parameter and the second parameter of the LIC model; and transform the reference block by applying the third transform model, to obtain the prediction block for the current block.

In some embodiments of the disclosure, a prediction type for blocks corresponding to the second transform model, the third transform model, and the fourth transform model in the transform model list is either intra TMP or an IBC technology.

In some embodiments of the disclosure, the second determining portion 20 is further configured to: update the history transform model list with the first transform model.

In some embodiments of the disclosure, the encoding portion 22 is further configured to: encode a value of the first syntax element to be a first value, if the prediction mode for the current block is determined to be a non-IBC technology.

It is understandable that, various functional units in the encoder are further configured to perform the encoding method according to any of the foregoing embodiments.

It can be understood that, in the embodiments, the term "unit" can be a portion of circuit, a portion of a processor, a portion of a program or software, or can be modular or non-modular. In addition, various components described in various embodiments of the disclosure may be integrated into one processing unit or may be present as a number of physically separated units, and two or more units may be integrated into one. The integrated unit may take the form of hardware or a software functional unit.

If the integrated units are implemented in the form of software functional modules and are not sold or used as standalone products, they may be stored in a computer-readable storage medium. Based on such understanding, embodiments provide a computer-readable storage medium. The computer-readable storage medium is applied to an encoder 190. The computer-readable storage medium stores computer programs which, when executed by a second processor, implement the encoding method according to any of the foregoing embodiments.

Based on the composition of the encoder 190 and the computer-readable storage medium, referring to FIG. 16, FIG. 16 is a schematic diagram illustrating the hardware structure of the encoder 190 provided in embodiments of the disclosure. As illustrated in FIG. 16, the encoder 190 may include: a second communication interface 2001, a second memory 2002, and a second processor 2003. These components are coupled together via a second bus system 2004. It can be understood that, the second bus system 2004 is configured for connection and communication between these components. In addition to a data bus, the second bus system 2004 further includes a power bus, a control bus, and a status signal bus. However, for clarity of illustration, all buses are labeled as the second bus system 2004 in FIG. 16. The second communication interface 2001 is configured for signal reception and transmission during information reception and transmission with other external network elements. The second memory 2002 is configured to store computer programs executable by the second processor 2003. The second processor 2003 is configured to execute the decoding method when running the computer programs.

Optionally, as another embodiment, the second processor 2003 is further configured to perform the encoding method according to any of the foregoing embodiments when running the computer programs.

It is understandable that, the hardware functionality of the second memory 2002 is similar to that of the first memory 1802, and the hardware functionality of the second processor 2003 is similar to that of the first processor 1803, which will not be elaborated in detail herein.

Embodiments provide an encoder. For the encoder, the encoder can select the first transform model from the transform model list including at least two types of transform models, and apply the selected first transform model to transform the reference block, thereby determining the prediction block. Therefore, during encoding, the first transform model used for transform can be selected and determined from the transform model list, which ensures diversity in selection. As such, it is possible to increase options for prediction, improve prediction diversity, and thus improve encoding performance.

It should be noted that, in the disclosure, the terms "include", "comprise", or any other variants thereof are intended to cover non-exclusive inclusion. This means that a process, method, article, or apparatus that includes a series of elements not only includes those elements but may further include other elements not explicitly listed, or further include elements inherent to such process, method, article, or apparatus. In the absence of more limitations, an element defined by the phrase "include/comprise a..." does not exclude the existence of additional identical elements in the process, method, article, or apparatus that includes said element.

The serial numbers in embodiments of the disclosure are merely for illustrative purposes and do not represent the superiority or inferiority of the embodiments.

The methods disclosed in the several method embodiments provided in the disclosure may be arbitrarily combined without conflict to obtain new method embodiments.

The features disclosed in the several product embodiments provided in the disclosure may be arbitrarily combined without conflict to obtain new product embodiments.

The features disclosed in the several method or device embodiments provided in the disclosure may be arbitrarily combined without conflict to obtain new method embodiments or device embodiments.

The foregoing elaborations are merely implementations of the disclosure, but are not intended to limit the protection scope of the disclosure. Any variation or replacement easily thought of by those skilled in the art within the technical scope disclosed in the disclosure shall belong to the protection scope of the disclosure. Therefore, the protection scope of the disclosure shall be subject to the protection scope of the claims.

Industrial Applicability

Embodiments of the disclosure provide a coding method, a bitstream, an encoder, a decoder, and a storage medium. The decoder or the encoder can select the first transform model from the transform model list including at least two types of transform models, and apply the selected first transform model to transform the reference block, thereby determining the prediction block. Therefore, during coding, the first transform model used for transform can be selected and determined from the transform model list, which ensures diversity in selection. As such, it is possible to increase options for prediction, improve prediction diversity, and thus improve coding performance.

**Claims**

1. A decoding method, applied to a decoder and comprising:

   obtaining a related syntax element for a current block, wherein the related syntax element indicates whether prediction on the current block is to be performed based on both a transform model list and an intra-block copy (IBC) technology;
   determining a reference block obtained by applying the IBC technology to the current block;
   determining, according to the related syntax element, a first transform model obtained based on a constructed transform model list, wherein the constructed transform model list comprises at least two types of transform models; and
   determining a prediction block for the current block based on the reference block and the first transform model.

2. The method of claim 1, wherein

   the related syntax element at least comprises a second syntax element, wherein the second syntax element indicates whether the transform model list is to be applied to the current block for prediction; and
   the related syntax element further comprises a first syntax element, wherein the first syntax element indicates a prediction mode for the current block using the IBC technology.

3. The method of claim 2, wherein obtaining the related syntax element for the current block comprises:

   decoding the first syntax element; and
   determining, according to the first syntax element, the prediction mode for the current block using the IBC technology, and decoding the second syntax element.

4. The method of claim 3, wherein determining, according to the first syntax element, the prediction mode for the current block using the IBC technology and decoding the second syntax element comprises:

   when a value of the first syntax element is a first value, determining that the prediction mode for the current block using the IBC technology is an advanced motion vector prediction (AMVP) mode, and decoding a third syntax element, wherein the third syntax element indicates whether a transform technology is to be applied for prediction, and the third syntax element belongs to the related syntax element; and
   decoding the second syntax element when a value of the third syntax element is a second value; or decoding the second syntax element when the value of the third syntax element is the first value; or
   when the value of the first syntax element is the first value, determining that the prediction mode for the current block using the IBC technology is an AMVP mode, and decoding the second syntax element; and
   decoding the third syntax element when a value of the second syntax element is the first value.

5. The method of claim 3, wherein determining, according to the first syntax element, the prediction mode for the current block using the IBC technology and decoding the second syntax element comprises:
   when a value of the first syntax element is a second value, determining that the prediction mode for the current block using the IBC technology is a merge mode, and decoding the second syntax element.

6. The method of any of claims 3 to 5, wherein determining, according to the related syntax element, the first transform model obtained based on the constructed transform model list comprises:

   when the value of the second syntax element is a second value indicating to apply the transform model list to the current block for prediction, decoding a fourth syntax element to determine index information of the transform model, and skipping inheriting a local illumination compensation (LIC) flag from a merge candidate block for the current block, wherein the fourth syntax element indicates a model index of the transform model in the transform model list, and the related syntax element further comprises the fourth syntax element; and

determining the first transform model from the constructed transform model list based on the index information of the transform model.

7. The method of any of claims 2 to 6, further comprising:
constructing the transform model list when the value of the second syntax element is the second value.

8. The method of claim 7, wherein constructing the transform model list comprises:
adding sequentially at least one different transform model to an initial transform model list to obtain the transform model list, wherein the at least one transform model comprises at least one of:

a second transform model corresponding to a sample in at least one neighbouring position of the current block;
a third transform model corresponding to a sample in at least one non-neighbouring position of the current block;
a fourth transform model applied in a history decoding procedure;
an available transform model in temporal domain; or
a preset transform model.

9. The method of claim 8, wherein the preset transform model comprises: a model corresponding to a preset model parameter, or a model obtained by applying an offset to at least one of: the second transform model, the third transform model, the fourth transform model, the model corresponding to the preset model parameter, or the available transform model in temporal domain.

10. The method of claim 8 or 9, further comprising:
for a sample in any neighbouring position of the current block or a sample in any non-neighbouring position of the current block, when the sample satisfies a transform condition, obtaining a second transform model corresponding to the neighbouring position of the current block, or obtaining a third transform model corresponding to a sample in any non-neighbouring position of the current block, wherein the transform condition comprises at least one of:

the IBC technology is applied to a block that the sample belongs to;
a transform model flag is valid; or
a size of the block that the sample belongs to satisfies a first preset size.

11. The method of claim 8 or 9, wherein the at least one different transform model comprises at least one of:

at least one transform model has different transform types;
at least one transform model has different model parameters; or
a same transform type applies different template regions.

12. The method of any of claims 8 to 11, wherein adding sequentially the at least one different transform model to the initial transform model list to obtain the transform model list comprises:

adding sequentially the at least one different transform model to the initial transform model list to obtain an intermediate transform model list; and
rearranging the intermediate transform model list to obtain the transform model list.

13. The method of claim 12, wherein rearranging the intermediate transform model list to obtain the transform model list comprises:

traversing each transform model in the intermediate transform model list to determine an offset value corresponding to each transform model;
performing prediction on a reference-block template by applying each transform model, to determine a reference-block template prediction corresponding to each transform model;
determining an error value between the reference-block template prediction corresponding to each transform model and a current-block template;
determining a template error value corresponding to each transform model based on the error value and the offset value corresponding to each transform model; and
rearranging the transform models based on the template error values corresponding to the transform models to obtain the transform model list.

14. The method of claim 13, wherein when the template error values corresponding to the transform models are in an ascending order, index information corresponding to the transform models in the transform model list is also in an ascending order.

15. The method of claim 13 or 14, further comprising:
determining the error value to be a maximum value, when the reference-block template is unavailable.

16. The method of any of claims 8 to 15, further comprising:

obtaining first position information of the current block and a current size of the current block; and
determining at least one neighbouring position and at least one non-neighbouring position of the current block based on the first position information and the current size.

17. The method of any of claims 8 to 16, further comprising:

obtaining a history transform model applied in a decoding procedure; and
when a model same as the history transform model exists in a history transform model list, removing the same model from the history transform model list, and adding the history transform model to a $1^{st}$ position in the history transform model list;
when no model same as the history transform model exists in the history transform model list, adding the history transform model to the $1^{st}$ position in the history transform model list.

18. The method of claim 17, wherein adding the history transform model to the $1^{st}$ position in the history transform model list comprises:
when the history transform model list satisfies a first preset list length, removing a transform model at a last position in the history transform model list and then adding the history transform model to the $1^{st}$ position in the history transform model list.

19. The method of claim 17 or 18, wherein the fourth transform model is determined from history transform models sequentially from the $1^{st}$ position to the last position.

20. The method of any of claims 17 to 19, further comprising:
when a size of a block corresponding to a history transform model to-be-added satisfies a second preset size, updating the history transform model list with the history transform model.

21. The method of any of claims 1 to 20, wherein determining the prediction block for the current block based on the reference block and the first transform model comprises:

performing prediction on a reference-block template for the current block by applying the first transform model, to determine prediction values of samples in the reference-block template;
determining a total error value between the prediction values of the samples and samples in a current-block template;
obtaining a first offset value by dividing the total error value by the number of the samples; and
transforming the reference block by applying the first transform model, and obtaining the prediction block for the current block by compensating a transform result corresponding to each sample with the first offset value; or
obtaining an updated first transform model by compensating a parameter in the first transform model with the first offset value, and transforming the reference block by applying the updated first transform model.

22. The method of claim 3, 5, or 6, wherein

the method further comprises:
when a second syntax element corresponding to a merge candidate block for the current block indicates to apply the transform model list for prediction, determining an LIC flag for the current block to be a second value; and
determining the prediction block for the current block based on the reference block and the first transform model comprises:

performing secondary transform on the reference block by applying the first transform model and an LIC transform model indicated by the LIC flag, to determine the prediction block for the current block; or transforming the reference block by applying an LIC transform model derived from a current-block template and a reference-block template, to determine the prediction block for the current block.

23. The method of claim 3, 5, or 6, wherein decoding the second syntax element comprises:
decoding the second syntax element based on decoded information, wherein the decoded information comprises at least one of:

a size of the current block, a combined inter and intra prediction (CIIP) flag for the current block, a geometric partitioning mode (GPM) flag for the current block, an MBVD flag for the current block, a skip flag for the current block, or a template matching (TM)_merge flag for the current block.

24. The method of claim 23, wherein decoding the second syntax element based on the decoded information comprises:
decoding the second syntax element when the decoded information satisfies a first decoding condition, wherein the first decoding condition comprises at least one of:

a value of the CIIP flag is a first value;
a value of the GPM flag is the first value;
a value of the MBVD flag is the first value;
a value of the skip flag is the first value;
a value of the TM_merge flag is the first value;
the size of the current block is less than a third preset size; or
an area of the current block is greater than a first preset area threshold.

25. The method of any of claims 13 to 15, wherein

transform models of different transform types correspond to different reference-block template regions; and an error value corresponding to each transform model is an average template error value per sample in a reference-block template corresponding to the transform model.

26. The method of claim 4, wherein after decoding the second syntax element when the value of the third syntax element is the first value, the method further comprises:

decoding a fifth syntax element when the value of the third syntax element is the second value, wherein the fifth syntax element indicates an index of an LIC model used in a multi-mode LIC technology;
determining a sixth transform model based on the fifth syntax element; and
determining the prediction block for the current block based on the reference block and the sixth transform model.

27. The method of claim 3, 5, or 6, further comprising:
determining an LIC flag for the current block to be a first value when a second syntax element corresponding to a merge candidate block for the current block indicates to apply the transform model list for prediction.

28. The method of any of claims 3 to 5, wherein decoding the second syntax element comprises:
decoding the second syntax element when at least one of the following satisfies a second decoding condition: a sequence-level syntax element, a picture-level syntax element, a slice-level syntax element, or a size of the current block.

29. The method of claim 4, wherein after decoding the second syntax element when the value of the third syntax element is the second value, the method further comprises:

decoding a fifth syntax element when the value of the third syntax element is the first value, wherein the fifth syntax element indicates an index of an LIC model used in a multi-mode LIC technology;
determining a sixth transform model based on the fifth syntax element; and
determining the prediction block for the current block based on the reference block and the sixth transform model.

30. The method of claim 6, wherein determining the first transform model from the constructed transform model list based on the index information of the transform model comprises:

indicating at least one other transform model in the transform model list when a fourth syntax element for the transform model is a third value, wherein the other transform models are transform modes corresponding to other reference blocks.

31. The method of claim 7 or 8, wherein constructing the transform model list comprises:
obtaining a derived LIC model and adding the LIC model to the transform model list.

32. The method of claim 1, further comprising:

determining to perform prediction on a reference block for the current block based on at least one of: IBC-CIIP, IBC-GPM, or reconstruction reordered IBC (RRIBC), to obtain a reference prediction block for the reference block; and
updating the reference block with the reference prediction block.

33. The method of claim 1, further comprising:

when the first transform model is an LIC model used in a multi-mode LIC technology, recalculating an update parameter for a multi-mode LIC model based on a current-block template and a reference-block template; and
updating the first transform model based on the update parameter.

34. The method of any of claims 3 to 7, wherein decoding the second syntax element comprises:

determining a first context model from at least one context model according to decoding information of a neighbouring block; and
decoding the second syntax element based on the first context model, or decoding the second syntax element in an equiprobable decoding method.

35. The method of claim 6, wherein decoding the fourth syntax element to determine the index information of the transform model comprises at least one of:

decoding the fourth syntax element in an equiprobable decoding method to determine the index information of the transform model;
decoding the fourth syntax element by applying a second context model, to determine the index information of the transform model; or
decoding the fourth syntax element by selectively applying either the second context model or the equiprobable decoding method, to determine the index information of the transform model.

36. The method of claim 34, wherein a first context model for decoding the second syntax element when the prediction mode for the current block using the IBC technology is an AMVP mode is the same as or different from a first context model for decoding the second syntax element when the prediction mode for the current block using the IBC technology is a merge mode.

37. The method of claim 35, wherein a second context model for decoding the fourth syntax element when the prediction mode for the current block using the IBC technology is an AMVP mode is the same as or different from a second context model for decoding the fourth syntax element when the prediction mode for the current block using the IBC technology is a merge mode.

38. The method of claim 1, wherein

obtaining the related syntax element for the current block comprises:
obtaining a sixth syntax element for a reference block for the current block, wherein the sixth syntax element indicates index information of the reference block; and
determining the reference block obtained by applying the IBC technology to the current block comprises:
determining, based on the sixth syntax element, the reference block obtained by applying the IBC technology to the current block.

39. The method of claim 38, wherein after determining the reference block obtained by applying the IBC technology to the current block, the method further comprises:

obtaining a second syntax element for a merge candidate block for the current block;

when a value of the second syntax element for the merge candidate block is a second value, determining that a second syntax element for the current block is the second value; and

determining the first transform model for the current block based on a reference transform model corresponding to the merge candidate block.

40. The method of claim 39, wherein determining the first transform model for the current block based on the reference transform model corresponding to the merge candidate block comprises:
taking the reference transform model as the first transform model.

41. The method of claim 39, wherein determining the first transform model for the current block based on the reference transform model corresponding to the merge candidate block comprises:

determining a first transform model type of the reference transform model; and

re-deriving the first transform model with the first transform model type based on a reference-block template and a current-block template.

42. The method of claim 39, wherein determining the first transform model for the current block based on the reference transform model corresponding to the merge candidate block comprises:

obtaining a flag for a flipped reference block for the merge candidate block; and

when a value of the flag for the flipped reference block is the second value, determining the first transform model for the current block based on the reference transform model corresponding to the merge candidate block.

43. The method of any of claims 2 to 42, further comprising:

determining the prediction block for the current block based on the reference block when the second syntax element for the current block is the first value or when the second syntax element for the merge candidate block for the current block is the first value;

determining a reconstructed sample value of the current block based on the prediction block for the current block; and

constructing a fifth transform model for the current block within a template region or inside the block based on the reconstructed sample value of the current block and a reconstructed sample value of the reference block, for use in a subsequent decoding procedure.

44. The method of any of claims 2 to 42, wherein after determining the prediction block for the current block based on the reference block and the first transform model, the method further comprises:

determining a reconstructed sample value of the current block;

constructing a seventh transform model for the current block within a template region or inside the block based on the reconstructed sample value of the current block and a reconstructed sample value of the reference block; and

updating the transform model list by replacing the first transform model with the seventh transform model; or

updating the transform model list with a transform model having a minimum error value from the seventh transform model and the first transform model; or

updating the transform model list with the seventh transform model.

45. The method of claim 1, further comprising:

when the first transform model is an LIC model, obtaining a sample value of a first reconstructed region neighbouring a current coding block and a sample value of a second reconstructed region neighbouring the reference block;

deriving a first parameter of the LIC model based on the sample value of the first reconstructed region and the sample value of the second reconstructed region, and determining a second parameter according to the first parameter;

determining a third transform model based on the original first parameter and the second parameter of the LIC model; and

transforming the reference block by applying the third transform model, to obtain the prediction block for the current block.

**46.** The method of any of claims 8 to 11, wherein a prediction type for blocks corresponding to the second transform model, the third transform model, and the fourth transform model in the transform model list is either intra template matching prediction (intra TMP) or an IBC technology.

**47.** The method of any of claims 1 to 44, further comprising:
updating the history transform model list with the first transform model.

**48.** An encoding method, applied to an encoder and comprising:

determining a candidate block vector list for a current block;
determining a reference block vector based on the candidate block vector list;
determining a reference block based on the reference block vector;
when a prediction mode for the current block is determined to be an intra-block copy (IBC) technology combined with a transform model list, obtaining a first transform model from a constructed transform model list, wherein the constructed transform model list comprises at least two types of transform models;
determining a prediction block for the current block based on the reference block and the first transform model; and
encoding a related syntax element for the current block and signalling encoded bits obtained into a bitstream, wherein the related syntax element indicates whether prediction on the current block is to be performed based on both the transform model list and the IBC technology.

**49.** The method of claim 48, wherein

the related syntax element at least comprises a second syntax element, wherein the second syntax element indicates whether the transform model list is to be applied to the current block for prediction; and
the related syntax element further comprises a first syntax element, wherein the first syntax element indicates a prediction mode for the current block using the IBC technology.

**50.** The method of claim 49, wherein the prediction mode using the IBC technology comprises a merge mode and an advanced motion vector prediction (AMVP) mode, and the method further comprises:

when the prediction mode for the current block using the IBC technology is the AMVP mode, encoding a value of the first syntax element to be a first value, and encoding a third syntax element, wherein the third syntax element indicates whether a transform technology is to be applied for prediction, and the third syntax element belongs to the related syntax element; and
encoding the second syntax element when a value of the third syntax element is encoded to be a second value; or encoding the second syntax element when the value of the third syntax element is encoded to be the first value; or encoding the second syntax element when the value of the first syntax element is encoded to be the first value; and
encoding the third syntax element when a value of the second syntax element is encoded to be the first value.

**51.** The method of claim 49, further comprising:
when the prediction mode for the current block using the IBC technology is a merge mode, encoding a value of the first syntax element to be a second value, and encoding the second syntax element.

**52.** The method of any of claims 49 to 51, further comprising:
when the transform model list is to be applied to the current block for prediction, encoding the value of the second syntax element to be the second value, and encoding index information of the first transform model in the transform model list as a fourth syntax element, wherein the fourth syntax element indicates a model index of the transform model in the transform model list, and the related syntax element further comprises the fourth syntax element.

**53.** The method of any of claims 49 to 52, further comprising:
constructing the transform model list when the transform model list is to be applied to the current block for prediction.

**54.** The method of any of claims 49 to 53, wherein constructing the transform model list comprises:
adding sequentially at least one different transform model to an initial transform model list to obtain the transform model list, wherein the at least one transform model comprises at least one of:

a second transform model corresponding to a sample in at least one neighbouring position of the current block;

a third transform model corresponding to a sample in at least one non-neighbouring position of the current block;

a fourth transform model applied in a history encoding procedure;

an available transform model in temporal domain; or

a preset transform model.

55. The method of claim 54, wherein the preset transform model comprises: a model corresponding to a preset model parameter, or a model obtained by applying an offset to at least one of: the second transform model, the third transform model, the fourth transform model, the model corresponding to the preset model parameter, or the available transform model in temporal domain.

56. The method of claim 54 or 55, further comprising:
for a sample in any neighbouring position of the current block or a sample in any non-neighbouring position of the current block, when the sample satisfies a transform condition, obtaining a second transform model corresponding to the neighbouring position of the current block, or obtaining a third transform model corresponding to a sample in any non-neighbouring position of the current block, wherein the transform condition comprises at least one of:

the IBC technology is applied to a block that the sample belongs to;

a transform model flag is valid; or

a size of the block that the sample belongs to satisfies a first preset size.

57. The method of claim 54 or 55, wherein the at least one different transform model comprises at least one of:

at least one transform model has different transform types;

at least one transform model has different model parameters; or

a same transform type applies different template regions.

58. The method of any of claims 54 to 58, wherein adding sequentially the at least one different transform model to the initial transform model list to obtain the transform model list comprises:

adding sequentially the at least one different transform model to the initial transform model list to obtain an intermediate transform model list; and

rearranging the intermediate transform model list to obtain the transform model list.

59. The method of claim 58, wherein rearranging the intermediate transform model list to obtain the transform model list comprises:

traversing each transform model in the intermediate transform model list to determine an offset value corresponding to each transform model;

performing prediction on a reference-block template by applying each transform model, to determine a reference-block template prediction corresponding to each transform model;

determining an error value between the reference-block template prediction corresponding to each transform model and a current-block template;

determining a template error value corresponding to each transform model based on the error value and the offset value corresponding to each transform model; and

rearranging the transform models based on the template error values corresponding to the transform models to obtain the transform model list.

60. The method of claim 59, wherein when the template error values corresponding to the transform models are in an ascending order, index information corresponding to the transform models in the transform model list is also in an ascending order.

61. The method of claim 59 or 60, further comprising:
determining the error value to be a maximum value, when the reference-block template is unavailable.

62. The method of any of claims 54 to 61, further comprising:

obtaining first position information of the current block and a current size of the current block; and

determining at least one neighbouring position and at least one non-neighbouring position of the current block based on the first position information and the current size.

**63.** The method of any of claims 54 to 62, further comprising:

obtaining a history transform model applied in an encoding procedure; and
when a model same as the history transform model exists in a history transform model list, removing the same model from the history transform model list, and adding the history transform model to a 1st position in the history transform model list;
when no model same as the history transform model exists in the history transform model list, adding the history transform model to the 1st position in the history transform model list.

**64.** The method of claim 63, wherein adding the history transform model to the 1st position in the history transform model list comprises:
when the history transform model list satisfies a first preset list length, removing a transform model at a last position in the history transform model list and then adding the history transform model to the 1st position in the history transform model list.

**65.** The method of claim 63 or 64, wherein the fourth transform model is determined from history transform models sequentially from the 1st position to the last position.

**66.** The method of any of claims 63 to 65, further comprising:
when a size of a block corresponding to a history transform model to-be-added satisfies a second preset size, updating the history transform model list with the history transform model.

**67.** The method of any of claims 48 to 66, wherein determining the prediction block for the current block based on the reference block and the first transform model comprises:

performing prediction on a reference-block template for the current block by applying the first transform model, to determine prediction values of samples in the reference-block template;
determining a total error value between the prediction values of the samples and samples in a current-block template;
obtaining a first offset value by dividing the total error value by the number of the samples; and
transforming the reference block by applying the first transform model, and obtaining the prediction block for the current block by compensating a transform result corresponding to each sample with the first offset value; or
obtaining an updated first transform model by compensating a parameter in the first transform model with the first offset value, and transforming the reference block by applying the updated first transform model.

**68.** The method of claim 51, wherein

the method further comprises:
when a second syntax element corresponding to a merge candidate block for the current block indicates to apply the transform model list for prediction, determining a local illumination compensation (LIC) flag for the current block to be a second value; and
determining the prediction block for the current block based on the reference block and the first transform model comprises:
performing secondary transform on the reference block by applying the first transform model and an LIC transform model indicated by the LIC flag, to determine the prediction block for the current block; or transforming the reference block by applying an LIC transform model derived from a current-block template and a reference-block template, to determine the prediction block for the current block.

**69.** The method of claim 50 or 51, wherein encoding the second syntax element comprises:
encoding the second syntax element based on encoded information, wherein the encoded information comprises at least one of:
a size of the current block, a combined inter and intra prediction (CIIP) flag for the current block, a geometric partitioning mode (GPM) flag for the current block, an MBVD flag for the current block, a skip flag for the current block, or a template matching (TM)_merge flag for the current block.

**70.** The method of claim 69, wherein encoding the second syntax element based on the encoded information comprises: encoding the second syntax element when the encoded information satisfies a first encoding condition, wherein the first encoding condition comprises at least one of:

> a value of the CIIP flag is a first value;
> a value of the GPM flag is the first value;
> a value of the MBVD flag is the first value;
> a value of the skip flag is the first value;
> a value of the TM_merge flag is the first value;
> the size of the current block is less than a third preset size; or
> an area of the current block is greater than a first preset area threshold.

**71.** The method of any of claims 59 to 61, wherein

> transform models of different transform types correspond to different reference-block template regions; and an error value corresponding to each transform model is an average template error value per sample in a reference-block template corresponding to the transform model.

**72.** The method of claim 50, further comprising:

> determining a sixth transform model when prediction on the current block is to be performed by applying a transform technology without applying the transform model list;
> determining the prediction block for the current block based on the reference block and the sixth transform model; and
> encoding the value of the third syntax element to be the first value or the second value, and encoding a fifth syntax element, wherein the fifth syntax element indicates an index of an LIC model used in a multi-mode LIC technology.

**73.** The method of claim 50 or 51, further comprising:
determining an LIC flag for the current block to be a first value when a second syntax element corresponding to a merge candidate block for the current block indicates to apply the transform model list for prediction.

**74.** The method of any of claims 50 or 51, wherein encoding the second syntax element comprises:
encoding the second syntax element when at least one of the following satisfies a second encoding condition: a sequence-level syntax element, a picture-level syntax element, a slice-level syntax element, or a size of the current block.

**75.** The method of claim 48, further comprising:
when the first transform model is at least one other transform model indicated in the transform model list, encoding a value of a fourth syntax element to be a third value, wherein the other transform models are transform modes corresponding to other reference blocks.

**76.** The method of claim 54 or 55, wherein constructing the transform model list comprises:
obtaining a derived LIC model and adding the LIC model to the transform model list.

**77.** The method of claim 48, further comprising:

> determining to perform prediction on a reference block for the current block based on at least one of: IBC-CIIP, IBC-GPM, or reconstruction reordered IBC (RRIBC), to obtain a reference prediction block for the reference block; and
> updating the reference block with the reference prediction block.

**78.** The method of claim 48, further comprising:

> when the first transform model is an LIC model used in a multi-mode LIC technology, recalculating an update parameter for a multi-mode LIC model based on a current-block template and a reference-block template; and
> updating the first transform model based on the update parameter.

**79.** The method of any of claims 50 or 51, wherein encoding the second syntax element comprises:

determining a first context model from at least one context model according to encoding information of a neighbouring block; and

encoding the second syntax element based on the first context model, or encoding the second syntax element in an equiprobable encoding method.

80. The method of claim 52, wherein encoding the index information of the first transform model in the transform model list as the fourth syntax element comprises at least one of:

encoding the index information of the first transform model in the transform model list as the fourth syntax element in an equiprobable encoding method;

encoding the index information of the first transform model in the transform model list as the fourth syntax element by applying a second context model; or

encoding the index information of the first transform model in the transform model list as the fourth syntax element by selectively applying either the second context model or the equiprobable encoding method.

81. The method of claim 79, wherein a first context model for encoding the second syntax element when the prediction mode for the current block using the IBC technology is an AMVP mode is the same as or different from a first context model for encoding the second syntax element when the prediction mode for the current block using the IBC technology is a merge mode.

82. The method of claim 80, wherein a second context model for encoding the fourth syntax element when the prediction mode for the current block using the IBC technology is an AMVP mode is the same as or different from a second context model for encoding the fourth syntax element when the prediction mode for the current block using the IBC technology is a merge mode.

83. The method of claim 1, further comprising:

determining index information of a reference block, and encoding the index information of the reference block as a sixth syntax element, wherein the sixth syntax element indicates the index information of the reference block.

84. The method of claim 83, wherein after determining the reference block based on the reference block vector, the method further comprises:

obtaining a second syntax element for the reference block;

when a value of a second syntax element for a merge candidate block for the current block is a second value, determining that a value of a second syntax element for the current block is the second value; and

determining the first transform model for the current block based on a reference transform model corresponding to the merge candidate block.

85. The method of claim 84, wherein determining the first transform model for the current block based on the reference transform model corresponding to the merge candidate block comprises:

taking the reference transform model as the first transform model.

86. The method of claim 84, wherein determining the first transform model for the current block based on the reference transform model corresponding to the merge candidate block comprises:

determining a first transform model type of the reference transform model; and

re-deriving the first transform model with the first transform model type based on a reference-block template and a current-block template.

87. The method of claim 84, wherein determining the first transform model for the current block based on the reference transform model corresponding to the merge candidate block comprises:

obtaining a flag for a flipped reference block for the merge candidate block; and

when a value of the flag for the flipped reference block is the second value, determining the first transform model for the current block based on the reference transform model corresponding to the merge candidate block.

88. The method of any of claims 49 to 87, further comprising:

determining the prediction block for the current block based on the reference block when the second syntax element for the current block is the first value or when the second syntax element for the merge candidate block for the current block is the first value;

determining a reconstructed sample value of the current block based on the prediction block for the current block; and

constructing a fifth transform model for the current block within a template region or inside the block based on the reconstructed sample value of the current block and a reconstructed sample value of the reference block, for use in a subsequent encoding procedure.

89. The method of any of claims 49 to 87, wherein after determining the prediction block for the current block based on the reference block and the first transform model, the method further comprises:

determining a reconstructed sample value of the current block;

constructing a seventh transform model for the current block within a template region or inside the block based on the reconstructed sample value of the current block and a reconstructed sample value of the reference block; and

updating the transform model list by replacing the first transform model with the seventh transform model; or

updating the transform model list with a transform model having a minimum error value from the seventh transform model and the first transform model; or

updating the transform model list with the seventh transform model.

90. The method of claim 48, further comprising:

when the first transform model is an LIC model, obtaining a sample value of a first reconstructed region neighbouring a current coding block and a sample value of a second reconstructed region neighbouring the reference block;

deriving a first parameter of the LIC model based on the sample value of the first reconstructed region and the sample value of the second reconstructed region, and determining a second parameter according to the first parameter;

determining a third transform model based on the original first parameter and the second parameter of the LIC model; and

transforming the reference block by applying the third transform model, to obtain the prediction block for the current block.

91. The method of any of claims 54 to 57, wherein a prediction type for blocks corresponding to the second transform model, the third transform model, and the fourth transform model in the transform model list is either intra template matching prediction (intra TMP) or an IBC technology.

92. The method of any of claims 48 to 88, further comprising:
updating the history transform model list with the first transform model.

93. The method of claim 49, further comprising:
when the prediction mode for the current block is determined to be a non-IBC technology, encoding a value of the first syntax element to be a first value.

94. A bitstream, generated by performing bit encoding on information to-be-encoded, wherein the information to-be-encoded comprises at least one of: a first syntax element, a second syntax element, a third syntax element, a fourth syntax element, a fifth syntax element, a sixth syntax element, a size of a current block, a combined inter and intra prediction (CIIP) flag for the current block, a geometric partitioning mode (GPM) flag for the current block, an MBVD flag for the current block, a skip flag for the current block, a template matching (TM)_merge flag for the current block, or a context model, wherein:

the first syntax element indicates a prediction mode for the current block using an intra-block copy (IBC) technology;

the second syntax element indicates whether a transform model list is to be applied to the current block for prediction;

the third syntax element indicates whether a transform technology is to be applied for prediction;

the fourth syntax element indicates a model index of a transform model in the transform model list;

the fifth syntax element indicates an index of a local illumination compensation (LIC) model used in a multi-mode LIC technology;

the sixth syntax element indicates index information of a reference block.

95. A decoder, comprising:

a decoding portion configured to obtain a related syntax element for a current block, wherein the related syntax element indicates whether prediction on the current block is to be performed based on both a transform model list and an intra-block copy (IBC) technology;

a first determining portion configured to determine a reference block obtained by applying the IBC technology to the current block, and determine, according to the related syntax element, a first transform model obtained based on a constructed transform model list, wherein the constructed transform model list comprises at least two types of transform models; and

a first predicting portion configured to determine a prediction block for the current block based on the reference block and the first transform model.

96. A decoder, comprising a first memory and a first processor, wherein

the first memory is configured to store computer programs executable by the first processor;

the first processor is configured to, when executing the computer programs, perform the method of any of claims 1 to 47.

97. An encoder, comprising:

a second determining portion configured to:

determine a candidate block vector list for a current block;

determine a reference block vector based on the candidate block vector list;

determine a reference block based on the reference block vector; and

when a prediction mode for the current block is determined to be an intra-block copy (IBC) technology combined with a transform model list, obtain a first transform model from a constructed transform model list, wherein the constructed transform model list comprises at least two types of transform models;

a second predicting portion configured to determine a prediction block for the current block based on the reference block and the first transform model; and

an encoding portion configured to encode a related syntax element for the current block and signal, via a signalling portion, encoded bits obtained into a bitstream, wherein the related syntax element indicates whether prediction on the current block is to be performed based on both the transform model list and the IBC technology.

98. An encoder, comprising a second memory and a second processor, wherein

the second memory is configured to store computer programs executable by the second processor; and

the second processor is configured to, when executing the computer programs, perform the method of any of claims 48 to 93.

99. A computer-readable storage medium, storing computer programs which, when executed by a first processor, are operable to implement the method of any of claims 1 to 47, or when executed by a second processor, are operable to implement the method of any of claims 48 to 93.

FIG. 1

TEMPLATE REGION    BLOCK VECTOR    TEMPLATE ERROR

FIG. 2

(a)
refTemplateType=1

(b)
refTemplateType=2

(c)
refTemplateType=3

(d)
refTemplateType=4

(e)
refTemplateType=5

(f)
refTemplateType=6

FIG. 3

TEMPLATE MATCHING AT STEP
SIZE OF S (S>1)

FIG. 4A

TEMPLATE MATCHING AT STEP
SIZE OF S' (1≤S'<S)

FIG. 4B

CURRENT
BLOCK

MATCHING
BLOCK 1

MATCHING
BLOCK 2

MATCHING
BLOCK 3

TEMPLATE
REGION

RECONSTRUCTED
REGION

SEARCH
REGION

BLOCK
VECTOR

FIG. 5A

W1* MATCHING BLOCK 1 + W2* MATCHING BLOCK 2 + W3* MATCHING BLOCK 3

PREDICTION BLOCK

FIG. 5B

REFERENCE-BLOCK TEMPLATE

REFERENCE BLOCK

CURRENT-BLOCK TEMPLATE

CURRENT BLOCK

N
W C E
S

FIG. 6A

FIG. 6B

FIG. 7

FIG. 8

FIG. 9A

FIG. 9B

FIG. 10

| | |
|---|---|
| OBTAIN RELATED SYNTAX ELEMENT FOR CURRENT BLOCK, WHERE RELATED SYNTAX ELEMENT INDICATES WHETHER PREDICTION ON CURRENT BLOCK IS TO BE PERFORMED BASED ON BOTH TRANSFORM MODEL LIST AND IBC TECHNOLOGY | 101 |
| DETERMINE REFERENCE BLOCK OBTAINED BY APPLYING IBC TECHNOLOGY TO CURRENT BLOCK | 102 |
| DETERMINE, ACCORDING TO RELATED SYNTAX ELEMENT, FIRST TRANSFORM MODEL OBTAINED BASED ON CONSTRUCTED TRANSFORM MODEL LIST, WHERE CONSTRUCTED TRANSFORM MODEL LIST INCLUDES AT LEAST TWO TYPES OF TRANSFORM MODELS | 103 |
| DETERMINE PREDICTION BLOCK FOR CURRENT BLOCK BASED ON REFERENCE BLOCK AND FIRST TRANSFORM MODEL | 104 |

FIG. 11

DETERMINE CANDIDATE BLOCK VECTOR LIST FOR CURRENT BLOCK — 501

DETERMINE REFERENCE BLOCK VECTOR BASED ON CANDIDATE BLOCK VECTOR LIST — 502

DETERMINE REFERENCE BLOCK BASED ON REFERENCE BLOCK VECTOR — 503

OBTAIN FIRST TRANSFORM MODEL FROM CONSTRUCTED TRANSFORM MODEL LIST IF PREDICTION MODE FOR CURRENT BLOCK IS DETERMINED TO BE IBC TECHNOLOGY COMBINED WITH TRANSFORM MODEL LIST, WHERE CONSTRUCTED TRANSFORM MODEL LIST INCLUDES AT LEAST TWO TYPES OF TRANSFORM MODELS — 504

DETERMINE PREDICTION BLOCK FOR CURRENT BLOCK BASED ON REFERENCE BLOCK AND FIRST TRANSFORM MODEL — 505

ENCODE RELATED SYNTAX ELEMENT FOR CURRENT BLOCK AND SIGNAL ENCODED BITS OBTAINED INTO BITSTREAM, WHERE RELATED SYNTAX ELEMENT INDICATES WHETHER PREDICTION ON CURRENT BLOCK IS TO BE PERFORMED BASED ON BOTH TRANSFORM MODEL LIST AND IBC TECHNOLOGY — 506

FIG. 12

## FIG. 13

DECODER 1

DECODING PORTION 11

FIRST DETERMINING PORTION 12

FIRST PREDICTING PORTION 13

**FIG. 13**

## FIG. 14

DECODER 170

FIRST COMMUNICATION INTERFACE 1801

1804

FIRST PROCESSOR 1803

FIRST MEMORY 1802

**FIG. 14**

## FIG. 15

ENCODER 2

SECOND PREDICTING PORTION 21

SECOND DETERMINING PORTION 20

ENCODING PORTION 22

SIGNALLING PORTION 23

**FIG. 15**

## FIG. 16

ENCODER 190

SECOND COMMUNICATION INTERFACE 2001

2004

SECOND MEMORY 2003

SECOND PROCESSOR 2002

**FIG. 16**

## INTERNATIONAL SEARCH REPORT

| International application No. |
|---|
| **PCT/CN2023/105611** |

| A. | CLASSIFICATION OF SUBJECT MATTER |
|---|---|

H04N 19/70(2014.01)i;  H04N 19/46(2014.01)i

According to International Patent Classification (IPC) or to both national classification and IPC

| B. | FIELDS SEARCHED |
|---|---|

Minimum documentation searched (classification system followed by classification symbols)

IPC： H04N 19/-

Documentation searched other than minimum documentation to the extent that such documents are included in the fields searched

Electronic data base consulted during the international search (name of data base and, where practicable, search terms used)

CNABS, CNTXT, CNKI, VCN, ENTXTC, CJFD: 帧内, 复制, IBC, 编码, 解码, 结合, 组合, 融合, 混合, 联合, 变换模型, 变换类型, LIC变换, 滤波器变换, 多模型LIC, 线性模型, 线性变换, 预测块, 参考块: VEN, DWPI, EPTXT, USTXT, JPTXT, WOTXT, IEEE: Intra+, copy, encode, encoding, decode, decoding, combine, combining, fuse, blend+, join+, transform+ model, transform+ type, LIC transform, filter transform, multi-model LIC, linear model, linear transform, prediction block, reference block;

| C. | DOCUMENTS CONSIDERED TO BE RELEVANT |
|---|---|

| Category* | Citation of document, with indication, where appropriate, of the relevant passages | Relevant to claim No. |
|---|---|---|
| A | CN 114402616 A (GUANGDONG OPPO MOBILE COMMUNICATIONS CO., LTD.) 26 April 2022 (2022-04-26)<br>description, paragraphs 0032-0151 | 1-93, 95-99 |
| A | WO 2023093863 A1 (MEDIATEK SINGAPORE PTE LTD. et al.) 01 June 2023 (2023-06-01)<br>description, paragraphs 0028-0195 | 1-93, 95-99 |
| A | CN 112135134 A (TENCENT AMERICA, LLC.) 25 December 2020 (2020-12-25)<br>entire document | 1-93, 95-99 |
| A | CN 112868238 A (BEIJING BYTEDANCE NETWORK TECHNOLOGY CO., LTD. et al.) 28 May 2021 (2021-05-28)<br>entire document | 1-93, 95-99 |

☑ Further documents are listed in the continuation of Box C.    ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **21 December 2023** | **26 December 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2023/105611** |

| C. | DOCUMENTS CONSIDERED TO BE RELEVANT | |
| --- | --- | --- |
| Category* | Citation of document, with indication, where appropriate, of the relevant passages | Relevant to claim No. |
| A | US 2021360232 A1 (BEIJING BYTEDANCE NETWORK TECHNOLOGY CO., LTD. et al.) 18 November 2021 (2021-11-18) <br> entire document | 1-93, 95-99 |
| A | WO 2022167322 A1 (INTERDIGITAL VC HOLDINGS FRANCE SAS. et al.) 11 August 2022 (2022-08-11) <br> entire document | 1-93, 95-99 |

Form PCT/ISA/210 (second sheet) (July 2022)

## INTERNATIONAL SEARCH REPORT

| International application No. |
| --- |
| **PCT/CN2023/105611** |

**Box No. II**      **Observations where certain claims were found unsearchable (Continuation of item 2 of first sheet)**

This international search report has not been established in respect of certain claims under Article 17(2)(a) for the following reasons:

1. ☑   Claims Nos.: **94**
because they relate to subject matter not required to be searched by this Authority, namely:

    Claim 94 sets forth a code stream, which is generated by performing bit coding according to information to be coded, is substantially a presentation of information expression, and is subject matter to be excluded.

2. ☐   Claims Nos.:
because they relate to parts of the international application that do not comply with the prescribed requirements to such an extent that no meaningful international search can be carried out, specifically:

3. ☐   Claims Nos.:
because they are dependent claims and are not drafted in accordance with the second and third sentences of Rule 6.4(a).

Form PCT/ISA/210 (continuation of first sheet) (July 2022)

## INTERNATIONAL SEARCH REPORT
### Information on patent family members

International application No.

**PCT/CN2023/105611**

| Patent document cited in search report | | | Publication date (day/month/year) | Patent family member(s) | | | Publication date (day/month/year) |
|---|---|---|---|---|---|---|---|
| CN | 114402616 | A | 26 April 2022 | US | 2022217399 | A1 | 07 July 2022 |
| | | | | WO | 2021056454 | A1 | 01 April 2021 |
| | | | | JP | 2022553623 | A | 26 December 2022 |
| | | | | KR | 20220066166 | A | 23 May 2022 |
| | | | | IN | 202217023211 | A | 29 July 2022 |
| | | | | JP | 2022553623 | W | 26 December 2022 |
| WO | 2023093863 | A1 | 01 June 2023 | TW | 202325025 | A | 16 June 2023 |
| CN | 112135134 | A | 25 December 2020 | US | 2020404306 | A1 | 24 December 2020 |
| | | | | US | 2022150524 | A1 | 12 May 2022 |
| | | | | US | 11272200 | B2 | 08 March 2022 |
| | | | | US | 11736709 | B2 | 22 August 2023 |
| | | | | HK | 40035268 | A0 | 14 May 2021 |
| | | | | HK | 40035268 | A1 | 08 July 2022 |
| | | | | CN | 112135134 | B | 25 March 2022 |
| CN | 112868238 | A | 28 May 2021 | WO | 2020084509 | A1 | 30 April 2020 |
| | | | | US | 2021235110 | A1 | 29 July 2021 |
| | | | | US | 11405607 | B2 | 02 August 2022 |
| | | | | US | 2021235092 | A1 | 29 July 2021 |
| | | | | US | 11758124 | B2 | 12 September 2023 |
| | | | | US | 2023388488 | A1 | 30 November 2023 |
| | | | | WO | 2020084506 | A1 | 30 April 2020 |
| | | | | WO | 2020084508 | A1 | 30 April 2020 |
| | | | | US | 2021235074 | A1 | 29 July 2021 |
| | | | | US | 11470307 | B2 | 11 October 2022 |
| US | 2021360232 | A1 | 18 November 2021 | JP | 2022517666 | A | 09 March 2022 |
| | | | | JP | 7259053 | B2 | 17 April 2023 |
| | | | | WO | 2020156536 | A1 | 06 August 2020 |
| | | | | WO | 2020156537 | A1 | 06 August 2020 |
| | | | | EP | 3891978 | A1 | 13 October 2021 |
| | | | | EP | 3891978 | A4 | 31 August 2022 |
| | | | | KR | 20210119981 | A | 06 October 2021 |
| | | | | JP | 2023076612 | A | 01 June 2023 |
| | | | | CN | 113396588 | A | 14 September 2021 |
| | | | | US | 2021360232 | A1 | 18 November 2021 |
| WO | 2022167322 | A1 | 11 August 2022 | KR | 20230145097 | A | 17 October 2023 |
| | | | | AU | 2022216783 | A1 | 17 August 2023 |

Form PCT/ISA/210 (patent family annex) (July 2022)